# EUROPEAN PATENT APPLICATION

(11) **EP 3 869 018 A1**
(43) Date of publication of application: **25.08.2021**
(21) Application number: 21157160.9
(22) Date of filing: 15.02.2021
(51) Int. Cl.: F01N 3/021, F01N 3/035, F01N 3/28, F01N 13/16, B01D 46/24, B01D 53/94, B01D 53/92

(54) **IMPROVEMENTS IN OR RELATING TO PARTICULATE FILTERS**

(30) Priority: 21.02.2020 GB 202002483
(71) Applicant: Johnson Matthey Public Limited Company, London EC4A 4AB (GB)
(72) Inventor: HOTCHKISS, Thomas, Royston, Hertfordshire SG8 5HE (GB); MARVELL, David, Royston, Hertfordshire SG8 5HE (GB); TURNER, John, Royston, Hertfordshire SG8 5HE (GB); WALTON, Mark, Royston, Hertfordshire SG8 5HE (GB)
(74) Representative: Nunn, Andrew Dominic

(57) **Abstract**

A method and apparatus (1) for treating a filter (2) for filtering particulate matter from exhaust gas and a treated filter (2) are described. A reservoir (3) containing a dry powder (4) is provided. A vacuum generator (6) establishes a primary gas flow through a porous structure of the filter (2) by applying a pressure reduction to an outlet face of the filter (2). A spray device (7) receives the dry powder (4) from a transport device (8) and sprays the dry powder (4) towards the inlet face of the filter (2). A controller (9) is configured to control operation of at least the vacuum generator (6) and the spray device (7). The dry powder (4) comprises or consists of a metal compound for forming by thermal decomposition a metal oxide.

## Description

The present disclosure relates to improvements in or relating to particulate filters for filtering particulate matter from exhaust gas. In particular, the invention relates to an apparatus for, and method of, coating a filter comprising a porous substrate having inlet surfaces and outlet surfaces, wherein the inlet surfaces are separated from the outlet surfaces by a porous structure. The filter may be a wall-flow filter.

### Background to the Disclosure

There are concerns about emissions of particulate matter (PM), commonly referred to as soot, from internal combustion engines and especially from diesel and gasoline engines in automotive applications. The main concerns are associated with potential health effects, and, in particular, with very tiny particles having sizes in the nanometer range.

Diesel particulate filters (DPFs) and gasoline particulate filters (GPFs) have been fabricated using a variety of materials including sintered metal, ceramic or metal fibres etc., with the most common type in actual mass production being the wall-flow kind made from porous ceramic material fabricated in the form of a monolithic array of many small channels running along the length of the body. Alternate channels are plugged at one end, so the exhaust gas is forced through the porous ceramic channel walls that prevent most of the particulate from passing through so only filtered gas enters the environment. Ceramic wall-flow filters in commercial production include those made from cordierite, various forms of silicon carbide and aluminium titanate. The actual shape and dimensions of practical filters on vehicles as well as properties such as the channel wall thickness and its porosity etc. depend on the application concerned. The average dimensions of the pores in the filter channel walls of a ceramic wall-flow filter through which the gas passes are typically in the range 5 to 50µm and usually about 20µm. In marked contrast, the size of most diesel particulate matter from a modern passenger car high speed diesel engine is very much smaller, e.g. 10 to 200nm.

Some PM may be retained within the pore structure in the filter walls and this may in some applications gradually build up until the pores are bridged over by a network of PM and this PM network then enables the easy formation of a cake of particulate on the internal walls of the filter channels. The particulate cake is an excellent filter medium and its presence affords very high filtration efficiency. In some applications soot is burned continuously on the filter as it is deposited which prevents a particulate cake from building up on the filter.

For some filters, for example light duty diesel particulate filters, it is periodically necessary to remove trapped PM from the filter to prevent the build-up of excessive back pressure that is detrimental to engine performance and can cause poor fuel economy. So, in diesel applications, retained PM is removed from the filter by burning it in air in a process during which the amount of air available and the amount of excess fuel used to achieve the high temperature needed to ignite the retained PM are very carefully controlled. Towards the end of this process, that is usually called regeneration, the removal of the last remaining particulate in the filter can lead to a marked decrease in filtration efficiency and release of a burst of many small particles into the environment. Thus, filters may have low filtration efficiency when they are first used and subsequently after each regeneration event and also during the latter part of each regeneration process.

Thus, it would be desirable to improve and or maintain filtration efficiency at all times - for example during the early life of a filter when it is first used, and or during regeneration and immediately afterwards, and or when the filter is loaded with soot.

Liu, X., Szente, J., Pakko, J., Lambert, C. et al., "Using Artificial Ash to Improve GPF Performance at Zero Mileage," SAE Technical Paper 2019-01-0974, 2019, doi:10.4271/2019-01-0974 describes a process for loading a bare filter substrate with submicron alumina particles generated by an atomizer to fabricate an "artificial ash" coating to reduce soot emission during cold start conditions. The process consists of generating aerosol particles by atomizing a liquid suspension with compressed air, drying the resulting ash containing droplets by flowing them through an oven, and loading the dried ash particles into the filter via their capture by filtration. The process utilises a high capacity atomizer (model PLG-2100, PALAS, Germany) to provide 100 I/min flow rate for full size bricks. Loading of the filter is monitored by the pressure drop across the filter and PM concentration before and after the filter recorded by a DustTrak aerosol monitor (TSI Inc, Minnesota, USA). While said process shows a reduction in soot emissions during cold start conditions, it is limited to substances that can be spray dried, requires an atomizer, drying oven and aerosol monitor and the artificial ash loading conditions may be constrained by the conditions necessary to achieve complete drying of the liquid aerosol before it reaches the filter substrate.

WO2011/151711 describes a method of making a filter for filtering particulate matter from exhaust gas emitted from a lean-burn internal combustion engine. The filter comprises a porous substrate having inlet surfaces and outlet surfaces, wherein the inlet surfaces are separated from the outlet surfaces by a porous structure containing pores of a first mean pore size. The inlet surfaces comprise a bridge network comprising interconnected particles of refractory material over the pores of the porous structure. The method comprises the step of contacting inlet surfaces of the filter substrate with an aerosol comprising refractory material in dry powder form. While said process shows a reduction in PM emissions for filters when first used and subsequently after each regeneration event, it would be desirable to provide an improved process, in particular, with respect to the controllability of the parameters of the filter produced.

US2019/0048771 describes engine exhaust particulate filters including a porous substrate having thereon inert nanoparticles at a concentration ranging from 0.01 g/L to 60 g/L relative to a filter volume of the substrate, a portion of the nanoparticles arranged to form regeneration resistant porous structures configured to capture particulates from an exhaust gas stream. While said filters purport to provide an improvement in the zero-mileage efficiency of particulate filters it would be desirable to provide an improved process, in particular, to improve controllability and flexibility of the process.

The present applicant has discovered (as described fully in their application GB1911704 filed 15th August 2019, which is hereby incorporated by reference in its entirety) that a filter having improved filtration efficiency during the early life of the filter when it is first used, and or during regeneration and immediately afterwards, and or when the filter is loaded with soot may be obtained by a method of treatment that comprises the steps of:
a) containing a dry powder in a reservoir;
b) locating a filter in a filter holder, the filter comprising a porous substrate having an inlet face and an outlet face, the inlet face and the outlet face being separated by a porous structure;
c) establishing a primary gas flow through the porous structure of the filter by applying a pressure reduction to the outlet face of the filter;
d) transferring the dry powder from the reservoir to a spray device located upstream of the inlet face of the filter; and
e) spraying the dry powder, using the spray device, towards the inlet face of the filter such that the dry powder is entrained in the primary gas flow and passes through the inlet face of the filter to contact the porous structure.

In GB1911704 the present applicant describes how the dry powder may preferably comprise one or more of fumed alumina, fumed silica, fumed titania, silica aerogel, alumina aerogel, carbon aerogel, titania aerogel, zirconia aerogel or ceria aerogel. In particular, examples of filters are described which have been coated with a fumed aluminium oxide having a tapped density of 0.05 g/l and d50 of 5.97 microns.

While this method of treatment has been found to produce filters with improved filtration efficiency characteristics there is still a desire to further improve the treatment of such filters, in particular, to improve the durability of the treated filters.

### Summary of the Disclosure

In a first aspect the present disclosure provides a method for treating a filter for filtering particulate matter from exhaust gas, the method comprising the steps of:
a) containing a dry powder in a reservoir;
b) locating a filter in a filter holder, the filter comprising a porous substrate having an inlet face and an outlet face, the inlet face and the outlet face being separated by a porous structure;
c) establishing a primary gas flow through the porous structure of the filter by applying a pressure reduction to the outlet face of the filter;
d) transferring the dry powder from the reservoir to a spray device located upstream of the inlet face of the filter; and
e) spraying the dry powder, using the spray device, towards the inlet face of the filter such that the dry powder is entrained in the primary gas flow and passes through the inlet face of the filter to contact the porous structure;
wherein the dry powder comprises or consists of a metal compound for forming by thermal decomposition a metal oxide.

Beneficially it has been found by the present applicant that the use of a metal compound that decomposes thermally into a metal oxide as the dry powder may produce substantial improvements in the durability of the treated filter compared to treatment with metal oxides including, for example, fumed aluminium oxide, especially in the ability of the dry powder to remain adhered to the porous structure and resist being de-adhered from the porous structure during subsequent operation of the filter.

Surprisingly, the present applicant has discovered that improved adhesion of these dry powders may be achieved without the presence of any additional binder or adhesion promotor or the need for any high-temperature sintering of the filter. In particular, it has been surprisingly found that the use of the dry powders of the present disclosure may result in good adhesion while maintaining high filtration efficiencies and with acceptable cold flow back pressures.

The dry powder may consist of a single metal compound of may consist of a mixture or blend or successive doses of two or more metal compounds. The or each metal compound may contain one or more metal cations. Where a plurality of metal cations is present these may be of the same or of different metals.

The metal compound may comprise or consist of a metal hydroxide, a metal phosphate, a metal carbonate, a metal sulphate, a metal perchlorate, a metal iodide, a metal oxalate, a metal acetate, a metal chlorate or a mixture thereof.

The metal of the metal compound may comprise or consist of one or more of magnesium, calcium, strontium, barium, aluminium, zirconium, manganese, lithium, iron, cobalt, nickel, copper, or gallium.

The dry powder may additionally comprise a metal oxide or mixed metal oxide. Preferably the dry powder comprises 90 wt% or greater of the metal compound for forming by thermal decomposition a metal oxide and 10 wt% or less of the metal oxide or mixed metal oxide. More preferably the dry powder comprises 95 wt% or greater of the metal compound for forming by thermal decomposition a metal oxide and 5 wt% or less of the metal oxide or mixed metal oxide. Optionally the dry powder comprises 99 wt% or greater of the metal compound for forming by thermal decomposition a metal oxide and 1 wt% or less of the metal oxide or mixed metal oxide.

The metal of the metal oxide or mixed metal oxide may comprise or consist of one or more of aluminium, magnesium, calcium, strontium, barium, aluminium, zirconium, manganese, lithium, iron, cobalt, nickel, copper, or gallium.

Preferably the dry powder comprises or consists of a metal hydroxide, a metal phosphate, a metal carbonate or a mixture thereof. The metal hydroxide may be selected from the group consisting of magnesium hydroxide, calcium hydroxide, strontium hydroxide and barium hydroxide. The metal phosphate may be selected from the group consisting of magnesium phosphate, calcium phosphate, strontium phosphate and barium phosphate. The metal carbonate may be selected from the group consisting of magnesium carbonate, calcium carbonate, strontium carbonate and barium carbonate.

The method may further comprise the step of:
f) calcining the filter after step e).

Calcining the filter may be carried out at a temperature selected to produce thermal decomposition of the dry powder. Preferably at least a majority of the dry powder, more preferably all or substantially all of the dry powder may be thermally decomposed during calcination. However, it will be understood that residual amounts of non-decomposed dry powder may remain after calcination.

The calcination temperature may be selected to be at least 150°C, optionally at least 250°C, optionally at least 500°C.

In some embodiments it is preferred that the calcination temperature is no greater than 550°C. However, in other embodiments, the calcination temperature may be selected to be greater than 550°C. The calcination temperature may be selected to be up to 900°C, optionally up to 1150°C.

In one example the calcination temperature may be selected to be between 300°C and 500°C. In another example the calcination temperature may be selected to be about 520°C. In another example the calcination temperature may be selected to be about 580°C. In another example the calcination temperature may be selected to be about 900°C.

The calcination may be carried out for a period of 30 to 90 minutes, optionally 30 to 60 minutes. In one example the period is about 35 minutes. In another example the period is about 60 minutes. Within any such calcination, the dwell time of each filter is preferably 1 to 15 minutes, preferably 5 to 10 minutes.

By "calcination" herein is meant a process whereby the filter is fired, typically, though not exclusively, in air at a desired temperature for a desired length of time. It will be understood, however, that it is not generally possible to instantly raise the filter temperature to an indicated temperature, even using microwave assisted. Instead, the skilled person will understand that in a typical calcination process, the filter will be fed on a belt into a dynamic furnace or a pallet of filters will be installed in a static oven and in either case the furnace or oven temperature will be raised to a desired temperature; in the case of the furnace, this may be achieved by zones within the furnace increasing in temperature to the desired temperature. That is, it can take a period of time for the filter to be raised to the desired temperature. Therefore, the calcination temperatures defined herein refer to the preferred peak temperature at which the filter is calcined. The filter may ultimately reach and be held at the peak temperature for a relatively short period (a so-called "dwell time") of an entire calcination cycle. What Applicant's inventors have found is that the period of the dwell time is important to achieve the desired adherence of the powder to both itself and particularly to the porous structure of the filter. Therefore, by "calcination" herein is meant the entire period or cycle of the heating up, dwell time and cooling down of the firing process. Hence, the calcination process as a whole, including heat-up, dwell time and cool-down, might be 90 minutes long, but the dwell time may only be from 1 to 15 minutes within that 90 minutes.

Without wishing to be bound by theory it is believed that the application of a metal hydroxide, a metal phosphate, a metal carbonate or a mixture thereof as a dry powder followed by calcination may produce a particularly effective porous layer including at least a portion of the dry powder being retained on the wall of the porous substrate. In particular it is believed that decomposition of the metal hydroxide, metal phosphate, and or metal carbonate into metal oxides produces a cementitious effect both between the particles of the dry powder and between the dry powder and the porous substrate.

The method may further comprise before step b) coating the filter with a washcoat, preferably a catalyst washcoat.

The method may comprise providing a maximum loading of the filter of 10 to 40 g/l, optionally 15 to 30 g/l, optionally about 20 g/l.

The dry powder may have a tapped density of 1 to 3 g/cm³, optionally 1.5 to 2.5 g/cm³, optionally about 2 g/cm³.

The dry powder may have a d50 (by volume) less than 10 microns, optionally less than 5 microns, optionally about 2 microns.

Surprisingly, the present applicant has discovered that use of metal hydroxide, metal phosphate, and or metal carbonate powders with such a relatively small particle size may still produce an effective on-wall filtering layer on the wall of the porous substrate.

Also, beneficially it has been found that establishing the primary gas flow by applying a pressure reduction to the outlet face of the filter may provide a more controllable process.

Preferably the transfer of the dry powder from the reservoir to the spray device is controllable independently of establishing and controlling the primary gas flow; and optionally the spraying of the dry powder towards the inlet face of the filter is controllable independently of establishing and controlling the primary gas flow. Beneficially by controlling the transfer and/or spraying of the dry powder from the reservoir to the spray device independently of controlling the establishing and controlling of the primary gas flow, a more controllable process may be achieved. For example, the gas flow speed and/or volumetric flow rate of the primary gas flow may be altered without altering the transfer rate and/or speed and/or spray velocity of the dry powder from the spray device. This is in contrast to a method where the primary gas flow through the filter is also used to fluidize a dry powder.

Preferably the primary gas flow is established before the dry powder is transferred to the spray device and sprayed towards the inlet face. Beneficially this may allow a more uniform gas flow to be established through the porous structure before the start of spraying of the dry powder. In turn, this may achieve a better dispersion of the dry powder into and through the porous structure.

Preferably in step d) a secondary gas flow, separate to the primary gas flow, is used to assist in transfer of the dry powder to the spray device. Preferably the secondary gas flow is controllable independently of the primary gas flow. Beneficially by controlling the primary gas flow independently of controlling the secondary gas flow, a more controllable process may be achieved. For example the volumetric flow rate of the secondary gas flow may be chosen to optimise the spray characteristics of the dry powder at one or more outlets of the spray device and separately the volumetric flow rate of the primary gas flow can be chosen to optimise deposition of the dry powder in the porous structure of the filter.

In various embodiments the method further comprises the step of f) stopping the spraying of the dry powder towards the inlet face of the filter; wherein the primary gas flow is a continuous gas flow from step c) to step f); wherein the secondary gas flow is applied only for a portion of the period from step c) to step f). The secondary gas flow may be applied as a single burst or a plurality of intermittent bursts during said portion of the period from step c) to step f).

In various embodiments the method further comprises the step of g) maintaining the primary gas flow through the porous structure of the filter for a time period after the stopping of the spraying of the dry powder in step f).

The secondary gas flow may comprise a flow of compressed gas, preferably air.

The secondary gas flow may be used to assist in transfer of the dry powder to the spray device and to dispense the dry powder from the spray device. Beneficially using the same gas flow to assist in transport of the dry powder and spray the dry powder may provide a more controllable and/or simplified method.

In various embodiments the spray device may be a compressed air gun.

Preferably the method comprises using a vacuum generator to establish the primary gas flow through the porous structure of the filter. Preferably a level of the pressure reduction generated by the vacuum generator may be controllable independently of a speed or mass rate of the transfer of the dry powder from the reservoir to the spray device. Beneficially this may provide a more controllable process.

The primary gas flow may have a volumetric flow rate of 10 m³/hr to 5,000 m³/hr, preferably 400 m³/hr to 2,000 m³/hr, preferably 600 m³/hr to 1000 m³/hr.

In various embodiments the method further comprises monitoring a back pressure of the filter during at least step e). Preferably the method further comprises using a pressure sensor, preferably a single pressure sensor, to monitor the back pressure.

The pressure sensor, preferably the single pressure sensor, may be located in a filter holder or other housing fluidly connected to the outlet face of the filter.

In various embodiments the method further comprises the step of stopping the spraying of the dry powder towards the inlet face of the filter when a pre-determined back pressure of the filter is reached. The back pressure is defined as the difference in pressure between the inlet face and the outlet face of the filter. The inlet face of the filter may be subject to atmospheric pressure. Consequently, in such an arrangement the back pressure may be measured by measuring the pressure at the outlet face of the filter with a single pressure sensor. Beneficially this may allow for a more controllable and reproducible method that may, in particular, avoid undesirably large back pressures of the filter.

The pre-determined back pressure may be an absolute back pressure. The absolute back pressure may be 20-180 mbar at a flowrate of 600 m³/hr. The back pressure may be measured, for example, by use of a SF-1020 Probench from SuperFlow Dynamometers & Flowbenches of Sussex, WI, USA.

In various embodiments the method further comprises the step of monitoring the back pressure of the filter during at least step c) and step e), preferably during at least steps c), d) and e). Preferably the method further comprises using a pressure sensor, preferably a single pressure sensor, to monitor the back pressure. The pressure sensor, preferably the single pressure sensor, may be located in a filter holder or other housing fluidly connected to the outlet face of the filter. The same pressure sensor, preferably the same single pressure sensor, may be used to monitor the back pressure of the filter during at least steps c) and e).

In various embodiments the method further comprises the step of stopping the spraying of the dry powder towards the inlet face of the filter when a pre-determined back pressure of the filter is reached. The pre-determined back pressure may be a relative back pressure. A first back pressure of the filter may be measured in step c) before the dry powder is deposited in the porous structure and a second back pressure of the filter may be measured in step e) during deposition of the dry powder in the porous structure, wherein the spraying of the dry powder may be stopped when the second back pressure reaches a predetermined percentage of the first back pressure. Beneficially this may allow for a more controllable and reproducible method that may, in particular, avoid undesirably large increases in the back pressures of the filter.

Preferably the predetermined percentage is from 105% to 200%, preferably 125% to 150%, i.e. the second back pressure may be increased by 5% to 100%, preferably 25% to 50% of the first back pressure.

In various embodiments the method further comprises the step of stopping the spraying of the dry powder towards the inlet face of the filter when a pre-determined total spraying time is reached. The pre-determined total spraying time may be from 1 to 60 seconds, preferably from 1 to 20 seconds, preferably about 10 seconds.

In various embodiments the method further comprises the step of stopping the spraying of the dry powder towards the inlet face of the filter when a target mass of the dry powder has been sprayed towards the inlet face of the filter.

In various embodiments the method further comprises the steps of monitoring a back pressure of the filter during at least step e) and stopping the spraying of the dry powder towards the inlet face of the filter when either a pre-determined total spraying time or a pre-determined back pressure of the filter is first reached. The pre-determined back pressure may be an absolute back pressure.

In various embodiments the method further comprises monitoring the back pressure of the filter during at least step c) and step e), preferably during at least steps c), d) and e). The pre-determined back pressure may be a relative back pressure.

In various embodiments the dry powder when aerosol-deposited into the porous substrate of the filter forms a porous coating.

In step e) the dry powder may be sprayed from one or more outlets of the spray device. The one or more outlets of the spray device may comprise an aperture size of 1 to 10 mm. The aperture may be circular, part-circular or slot-shaped.

In various embodiments the dry powder is sprayed from one or more fixed outlets of the spray device.

In various embodiments the dry powder is sprayed from one or more mobile outlets of the spray device, preferably from one or more oscillating outlets.

Preferably the method comprises in step e) channelling the dry powder from the spray device to the inlet face of the filter within a flow conduit.

In various embodiments the flow conduit provides an unimpeded flow path between the spray device and the inlet face of the filter.

In various embodiments the flow conduit comprises a flow conditioner interposed between the spray device and the inlet face of the filter, the flow conditioner acting to promote dispersion of the dry powder within the gas flow. The flow conditioner may comprise one or more of a static mixer, mesh, a sieve, a baffle, and an orificed plate.

The inlet face of the filter may be located from 10 to 80 cm, preferably 15 to 20 cm from the spray device. Additionally, or alternatively the spray device may be located at a distance from the inlet face of the filter that is up to 4 times a diameter of the inlet face of the filter.

In various embodiments the method further comprises in step d) dosing the dry powder from the reservoir. The dosing may comprise dosing by one or more of by weight, by volume, by particle number, by time. Preferably the method comprises gravimetrically feeding a dosing device with the dry powder. The dosing may use a loss in weight feeder. Beneficially the use of a dosing device, preferably a gravimetrically fed dosing device may provide a more controllable and accurate dosing of the dry powder.

In step a) the dry powder may be contained in one or more hoppers.

In step b) the filter may be located in the holder in a vertical orientation with the inlet face uppermost. In step d) the spray device may be located vertically above the inlet face; and preferably a spray direction of the spray device may be co-axial with a longitudinal axis of the filter; and preferably the spray direction and the longitudinal axis are coincident. Beneficially this arrangement may provide a more simplified process and better dispersion of the dry powder.

Alternatively, the arrangement may be reversed with the spray device located vertically below the inlet face such that the spray device sprays the dry powder upwards.

In various embodiments the method further comprises after step e) calcining the filter.

The porous substrate may be a wall-flow filter.

In a second aspect the present disclosure provides a filter obtainable by the method of the first aspect described above.

In a third aspect the present disclosure provides a calcined vehicular exhaust filter comprising a porous substrate having an inlet face and an outlet face, the porous substrate comprising inlet channels extending from the inlet face and outlet channels extending from the outlet face; the inlet channels and the outlet channels being separated by a plurality of filter walls having a porous structure;
the vehicular exhaust filter being loaded prior to calcination with an aerosol-deposited dry powder comprising or consisting of a metal compound for forming by thermal decomposition a metal oxide.

The aerosol-deposited dry powder may consist of a single metal compound of may consist of a mixture or blend or successive doses of two or more metal compounds. The or each metal compound may contain one or more metal cations. Where a plurality of metal cations is present these may be of the same or of different metals.

The metal compound may comprise or consist of a metal hydroxide, a metal phosphate, a metal carbonate, a metal sulphate, a metal perchlorate, a metal iodide, a metal oxalate, a metal acetate, a metal chlorate or a mixture thereof.

The metal of the metal compound may comprise or consist of one or more of magnesium, calcium, strontium, barium, aluminium, zirconium, manganese, lithium, iron, cobalt, nickel, copper, or gallium.

The dry powder may additionally comprise a metal oxide or mixed metal oxide. Preferably, the dry powder comprises 90 wt% or greater of the metal compound for forming by thermal decomposition a metal oxide and 10 wt% or less of the metal oxide or mixed metal oxide. More preferably, the dry powder comprises 95 wt% or greater of the metal compound for forming by thermal decomposition a metal oxide and 5 wt% or less of the metal oxide or mixed metal oxide. Optionally, the dry powder comprises 99 wt% or greater of the metal compound for forming by thermal decomposition a metal oxide and 1 wt% or less of the metal oxide or mixed metal oxide.

The metal of the metal oxide or mixed metal oxide may comprise or consist of one or more of aluminium, magnesium, calcium, strontium, barium, aluminium, zirconium, manganese, lithium, iron, cobalt, nickel, copper, or gallium.

Preferably the metal compound may comprise of consists of a metal hydroxide, a metal phosphate or a mixture thereof. The metal hydroxide may be selected from the group consisting of magnesium hydroxide, calcium hydroxide, strontium hydroxide and barium hydroxide. The metal phosphate may be selected from the group consisting of magnesium phosphate, calcium phosphate, strontium phosphate and barium phosphate; and/or the metal carbonate may be selected from the group consisting of magnesium carbonate, calcium carbonate, strontium carbonate and barium carbonate.

A mass loading of the aerosol-deposited dry powder may be 10 to 40 g/l, optionally 15 to 30 g/l, optionally about 20 g/l.

The aerosol-deposited dry powder may have a tapped density before loading of 1 to 3 g/cm³, optionally 1.5 to 2.5 g/cm³, optionally about 2 g/cm³.

The calcined vehicular exhaust filter may have a filtration efficiency at 0.02 g/l soot loading of greater than 90%, preferably greater than 95%, preferably greater than 98%, preferably greater than 99%.

The calcined vehicular exhaust filter may have a back pressure of 20-180 mbar at a flowrate of 600 m³/hr.

The porous substrate may comprise one or more washcoats.

The calcined vehicular exhaust filter may exhibit a substantially linear loading-back pressure response for soot loadings greater than 0.1 g/l, preferably for soot loadings greater than 0.05 g/l.

The dry powder may have a d50 (by volume) less than 10 microns, optionally less than 5 microns, optionally about 2 microns.

In this specification the term "filter" refers to a porous substrate that has a porous structure suitable for filtering particulate matter from exhaust gas. The porous substrate may be formed for example from sintered metal, ceramic or metal fibres etc. The filter may be of the wall-flow kind made from porous material, for example ceramic, fabricated in the form of a monolithic array of many small channels running along the length of the body. For example, the filter may be formed from cordierite, various forms of silicon carbide or aluminium titanate.

The filter may be a "bare" filter or alternatively may be one with an incorporated catalytic function ability such as oxidation, NOx-trapping, or selective catalytic reduction activity. The porous substrate may comprise a composition (known as a washcoat) that coats the porous structure of the filter. The washcoat may be a catalytic washcoat. The catalytic washcoat may comprise a catalyst, selected from the group consisting of a hydrocarbon trap, a three-way catalyst (TWC), a NOx absorber, an oxidation catalyst, a selective catalytic reduction (SCR) catalyst, a lean NOx catalyst and combinations of any two or more thereof. The catalyst, for example the TWC, NOx absorber, oxidation catalyst, hydrocarbon trap and the lean NOx catalyst, may contain one or more platinum group metals, particularly those selected from the group consisting of platinum, palladium and rhodium.

Consequently, the coated filter may, for example, be a catalysed soot filter (CSF), a selective catalytic reduction filter (SCRF), a lean NOx trap filter (LNTF), a gasoline particulate filter (GPF), an ammonia slip catalyst filter (ASCF) or a combination of two or more thereof (e.g. a filter comprising a selective catalytic reduction (SCR) catalyst and an ammonia slip catalyst (ASC).

The shape and dimensions of the filter, for example properties such as the channel wall thickness and its porosity etc. may be varied depending on the intended application for the filter. The filter may be configured for use with an internal combustion engine to filter the exhaust gas emitted by the internal combustion engine. The internal combustion engine may be a gasoline spark ignition engine. However, the filter finds particular application when configured for use with an internal combustion engine in the form of a diesel or gasoline engine.

In this specification the term "dry powder" refers to a particulate composition that is not suspended or dissolved in a liquid. It is not meant to necessarily imply a complete absence of all water molecules. The dry powder is preferably free flowing.

In this specification the term "tapped density" refers to the tapped density of the powder as measured according to Method 1 of Section 2.9.35 of European Pharmacopoeia 7.0 with 1250 taps.

In this specification the term "g/l" (grams per litre) refers to the mass of dry powder divided by the volume of the filter.

In this specification the terms "loading" and "mass loading" when referencing the quantity of refractory powder, refer to the mass of powder added to a filter and may be measured by weighing the filter before and after application of the powder to the filter.

In this specification the term "d50 (by volume)" refers to a d50 (by volume) measurement as measured by a Malvern Mastersizer® 3000 with Aero s dispersion unit, available from Malvern Panalytical Ltd, Malvern, UK. Dispersion conditions: Air pressure = 2 barg, feed rate = 65%, hopper gap = 1.2mm. Refractive index and absorbtion parameters set in accordance with instructions provided in the Malvern Mastersizer® 3000 User Manual.

In this specification the term "filtration efficiency" refers to the filtration efficiency as measured using a Cambustion® Diesel Particulate Filter Testing System available from Cambustion Ltd. of Cambridge, UK with the following test conditions:
1. The filter is preconditioned in an oven at 700°C for 2 hours
2. The filter is placed on the test rig:
   a) Stabilisation - 250kg/h mass flow, 50°C, 5mins
   b) Warm up - 250kg/h mass flow, 240°C, 5mins
   c) Weighing - filter removed from rig and weighed
   d) Warm up - filter returned to rig; 250kg/h mass flow, 240°C, 5mins
   e) Loading Phase - 250kg/h mass flow, 240°C, loading rate: for GPF filters - 2g/h until 2g/l soot load reached; for SCRF/CSF filters - 10g/h until 6g/l soot reached
   f) Weighing - filter removed from rig and weighed.
The fuel used during the test is: Carcal RF-06-08 B5

During the test, the particle counter continuously samples downstream of the filter. Immediately before and after a batch of filters are tested, an "Upstream" test is run on the rig to allow the particle counter to sample the raw soot production from the rig. The Upstream test is 20 minutes long and uses the same conditions as the Loading Phase above. Comparing the average of the two Upstream tests (before and after filter testing) with the data from the Loading phase of the filter test gives the filtration efficiency. The filtration efficiency is quoted at a specified soot loading.

In this specification an "adhesion test" refers to a test in which the filter is positioned under a compressed airgun which is 50.8mm above the inlet face of the filter. Air with a flow rate of 425 I/min is fired at the inlet face. The compressed airgun is moved across the inlet face at a speed of 13.4mm/s to cover substantially all of the inlet face. In this specification an "Adhesion Test Rig (ATR)" refers to an apparatus for performing said adhesion test.

In this specification a "hydrothermal ageing (HTA) test" refers to a test in which the filter is placed in an oven at a temperature of 1100°C for a period of 4 hours. Within the oven the atmospheric conditions are maintained as 2% O₂, 10% H₂O and the balance N₂.

In this specification the term "vacuum generator" refers to an apparatus or combination of apparatus that function to produce a pressure reduction. Non-limiting examples of suitable apparatus include vacuum generators that operate on the venturi principle, vacuum pumps, for example rotary vane and liquid ring vacuum pumps, and regenerative blowers.

In this specification the term "pressure sensor" refers to an apparatus or combination of apparatus that function to measure an absolute and/or relative pressure. Non-limiting examples of suitable apparatus include pressure transducers which may be diaphragm pressure transducers. For example, a Wika® P30 pressure transmitter, available from WIKA Alexander Wiegand SE & Co. KG, Klingenberg, Germany may be used.

In this specification the term "controller" refers to a function that may comprise hardware and/or software. The controller may comprise a control unit or may be a computer program running on a dedicated or shared computing resource. The controller may comprise a single unit or may be composed of a plurality of sub-units that are operatively connected. The controller may be located on one processing resource or may be distributed across spatially separate processing resources. The controller may comprise a microcontroller, one or more processors (such as one or more microprocessors), memory, configurable logic, firmware, etc.

In this specification, ranges and amounts may be expressed as "about" a particular value or range. About also includes the exact amount. For example, "about 2 microns" means "about 2 microns" and also "2 microns." Generally, the term "about" includes an amount that would be expected to be within experimental error. The term "about" may include values that are within 5% less to 5% greater of the value provided. For example, "about 2 microns" means "between 1.9 microns and 2.1 microns".

In this specification the expression that a dry powder "consists of' means a dry powder that essentially consists of only the specified constituent(s), other than for unavoidable impurities as normally encountered as will be recognised by the person skilled in the art.

### Brief Description of the Drawings

Aspects and embodiments of the present disclosure will now be described, by way of example only, with reference to the accompanying drawings, in which:
Figure 1 is a schematic diagram of an apparatus for treating a filter for filtering particulate matter from exhaust gas according to the present disclosure;
Figure 2 is a flow diagram illustrating a method for manufacturing a filter according to the present disclosure incorporating a method for treating a filter using the apparatus of Figure 1;
Figure 3 is a flow diagram illustrating a method for treating a filter for filtering particulate matter from exhaust gas using the apparatus of Figure 1;
Figures 4 to 6 are graphs showing soot loading - back pressure response curves for example filters;
Figure 7 shows Ambient X-Ray Diffraction (XRD) results for three filters;
Figures 8 to 12 show SEM micrographs for uncalcined and calcined filters;
Figures 13 to 15 show mercury porosimetry results for three filters.

### Detailed Description

The skilled reader will recognise that one or more features of one aspect or embodiment of the present disclosure may be combined with one or more features of any other aspect or embodiment of the present disclosure unless the immediate context teaches otherwise.

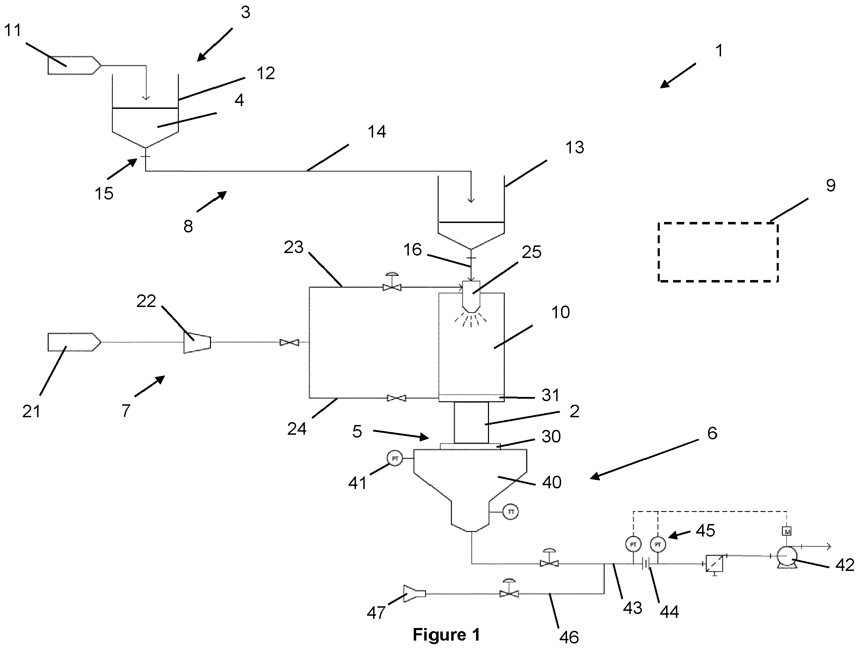

An example of an apparatus in accordance with the present disclosure will now be described with reference to Figure 1 which shows a schematic diagram of an apparatus 1 for treating a filter 2 for filtering particulate matter from exhaust gas. The filter 2 is of a type that comprises a porous substrate having an inlet face and an outlet face, the inlet face and the outlet face being separated by a porous structure.

The apparatus 1 comprises a reservoir 3 for containing a dry powder 4. A filter holder 5 is provided for holding the filter 2. A vacuum generator 6 is provided for establishing in use a primary gas flow through the porous structure of the filter 2 by applying a pressure reduction to the outlet face of the filter 2. A transport device 8 is provided for transporting the dry powder 4 from the reservoir 3 to a spray device 7. The spray device 7 is provided for receiving the dry powder 4 from the transport device 8 and spraying the dry powder 4 towards the inlet face of the filter 2. A controller 9 is provided which is configured to control operation of the apparatus 1.

The reservoir 3 may receive dry powder 4 from a dry powder inlet 11. The dry powder inlet 11 may be an output of an upstream bulk supply of the dry powder. For example, the dry powder inlet 11 may be a conduit connected upstream to a further reservoir of the dry powder 4. The dry powder inlet 11 may represent a manual, semi-automatic or automatic re-filling of the reservoir 3 through a lid or opening of the reservoir 3.

The reservoir 3 may comprise one or more hoppers. The reservoir 3 may comprise one hopper. In the illustrated example of Figure 1, the reservoir 3 comprises a first hopper 12 and a second hopper 13. The second hopper 13 may be downstream of the first hopper 12 to receive dry powder 4 output from the first hopper 12. The one or more hoppers may be provided in separate housings. Alternatively, the one or more hoppers may be provided in a single housing. The one or more hoppers may comprise one or more chambers of a single container.

The reservoir 3 may comprise a dosing device 15. The dosing device 15 may dose the dry powder 4 by one or more of by weight, by volume, by particle number, by time. The dosing device 15 may be located at or near an outlet of the reservoir 3. The dosing device 15 may be located at or near an outlet of the one or more hoppers of the reservoir 3. The dosing device may be located at or near the outlet of the first hopper 12.

The dosing device 15 may be gravimetrically fed with the dry powder 4 from the reservoir 3.

The dosing device 15 may be a loss in weight feeder. Non-limiting examples of suitable dosing devices include the Coperion® K-Tron Type K2-ML-T35 Gravimetric twin screw feeder available from Coperion GmbH, Stuttgart, Germany and the All-Fill® Series S1 Micro-Fill available from All-Fill International Ltd, Sandy, UK.

The transport device 8 transports the dry powder 4 from the reservoir 3 to the spray device 7. The transport device 8 may gravimetrically feed the dry powder 4 at least part way towards the spray device 7.

The transport device 8 may comprise one or more components. The transport device 8 may comprise one or more conduits, for example, passages, pipes, hoses, etc.

Where the reservoir 3 comprises more than one hopper the transport device 8 may transport the dry powder 4 between the hoppers. The transport device 8 may gravimetrically feed the dry powder 4 between the hoppers. The transport device 8 may comprise a first conduit 14 extending between the first hopper 12 and the second hopper 13. The first conduit 14 may extend from a first housing to a second housing. Alternatively, the first conduit 14 may extend from a first chamber to a second chamber of a single container. The dry powder 4 may be gravimetrically fed along the first conduit 14.

The transport device 8 may comprise a second conduit 16 extending from the second hopper 13 to the spray device 7.

The spray device 7 is provided for receiving the dry powder 4 from the transport device 8 and spraying the dry powder 4 towards the inlet face of the filter 2. The spray device 7 may comprise a secondary gas flow generator for generating a secondary gas flow that may be used to spray the dry powder 4 towards the inlet face of the filter 2.

The spray device 7 may further comprise one or more outlets for discharging the dry powder 4 towards the inlet face of the filter 2. The one or more outlets of the spray device may comprise an aperture size of 1 to 10 mm. The aperture may be circular, part-circular or slot-shaped. The one or more outlets may be one or more fixed outlets. Alternatively, the one or more outlets may be one or more mobile outlets, for example one or more oscillating outlets.

The one or more outlets may be provided in one or more nozzles. Each of the one or more nozzles may comprise one or more spray outlets. In the illustrated example of Figure 1 a single nozzle 25 is provided which comprises a plurality of spray outlets.

The secondary gas flow generator may comprise a compressed gas generator. In the illustrated example of Figure 1 the secondary gas flow generator comprises a compressed air generator which may comprise a compressor 22. The compressor 22 may receive air from an air inlet 21 and supply compressed air to the one or more outlets of the spray device 7 via a feed line 23. A return line 24 may be provided. Valves and controls necessary for operation may be provided as will be known to the skilled person.

An interconnection between the transport device 8 and the spray device 7 may be provided at which interconnection the dry powder 4 is transferred into the spray device 7 from the transport device 8. The interconnection may be provided at or near the one or more outlets of the spray device 7. In one example, the interconnection may be provided in the nozzle 25. Alternatively, the interconnection may be provided at or near the reservoir 3, for example at or near the second hopper 13 of the reservoir 3. In one example, the interconnection is a fluid connection between the feed line 23 and the second conduit 16. For example, the secondary gas flow of the spray device 7 may be fluidly connected with the second conduit 16 at or near an outlet of the second hopper 13 to fluidize the dry powder 4 to assist transport of the dry powder along at least a portion of the second conduit 16. For example, the secondary gas flow of the spray device 7 may entrain the dry powder 4 from the second conduit 16. For example, the secondary gas flow of the spray device 7 may produce a suction force in the second conduit to draw the dry powder 4 into the secondary gas flow.

In one example the spray device 7 comprises a compressed air gun. A non-limiting example of a suitable compressed air gun is the STAR Professional gravity feed spray gun 1.4mm, part no. STA2591100C.

The filter holder 5 may function to maintain the filter 2 in a stationary position during treatment. The filter holder 5 may grip an upper and/or a lower end of the filter 2. The filter holder 5 may comprise an inflatable upper seal bladder 31 (also called an upper inflatable collar) and/or an inflatable lower seal bladder 30 (also called a lower inflatable collar) that support respective upper and lower ends of the filter 2. The inflatable upper seal bladder 31 and the inflatable lower seal bladder 30 may contact and/or engage with an exterior surface of the filter 2. Each may form a liquid or air-tight seal around the filter 2. The inflatable upper seal bladder 31 and the inflatable lower seal bladder 30 may be supported by one or more housings (e.g. supported by an internal wall of the one or more housings).

The apparatus 1 may be configured such that the filter 2 is located in the filter holder 5 in a vertical orientation with the inlet face of the filter uppermost. At least a portion of the spray device 7 may be located vertically above the inlet face. A spray direction of the spray device 7 may be co-axial with a longitudinal axis of the filter 2. The spray direction and the longitudinal axis of the filter 2 may be coincident.

The apparatus 1 may further comprise a flow conduit 10 located between the spray device 7 and the inlet face of the filter 2. The flow conduit 10 may function to constrain and channel the primary gas flow towards the inlet face of the filter 2. The flow conduit 10 may function to align the primary gas flow such that a flow direction of the primary gas flow when it contacts the inlet face of the filter 2 is normal to the inlet face.

The flow conduit 10 may be empty so as to provide an unimpeded flow path between the spray device 7 and the inlet face of the filter 2. Alternatively, the flow conduit 10 may comprise a flow conditioner interposed between the spray device 7 and the inlet face of the filter 2, the flow conditioner acting to promote dispersion of the dry powder 4. For example, the flow conditioner may comprise one or more of a static mixer, a mesh, a sieve, a baffle, and an orificed plate.

The flow conduit 10 may comprise a tube. The flow conduit 10 may comprise a cross-sectional shape that matches the cross-sectional shape of the inlet face of the filter 2. The flow conduit 10 may comprise a size that matches the size of the inlet face of the filter 2.

The spray device 7 may extend into the flow conduit 10. The one or more outlets of the spray device 7 may be located within the flow conduit 10. For example, the nozzle 25 may be located within an upper region of the flow conduit 10. The nozzle 25 may be located coincident with a longitudinal axis of the filter 2.

The inlet face of the filter 2 may be located from 10 to 80 cm, preferably 15 to 20 cm from the spray device, for example from the nozzle 25 of the spray device 7. Additionally, or alternatively the spray device, for example from the nozzle 25 of the spray device 7, may be located at a distance from the inlet face of the filter 2 that is up to 4 times a diameter of the inlet face 2 of the filter.

The vacuum generator 6 is provided for establishing in use the primary gas flow through the porous structure of the filter 2 by applying a pressure reduction to the outlet face of the filter 2. The vacuum generator 6 may comprise a vacuum cone 40 that may define a funnel that engages the outlet face of the filter 2. The inflatable lower seal bladder 30 may form a seal between the outlet face of the filter 2 and the vacuum cone 40. The vacuum generator 6 may comprise a vacuum pump 42 connected to the flow cone by a conduit 43. The vacuum pump 42 may be controlled to control the volumetric flow rate of the primary gas flow.

The vacuum generator 6 may be provided with a volumetric flow rate sensor. The volumetric flow rate sensor may be an orifice plate 44 in combination with pressure sensors 45 located along the conduit 43. The vacuum generator 6 may comprise a bypass conduit 46 extending to an intake 47.

The apparatus 1 may further comprises a pressure sensor 41 for monitoring a back pressure of the filter 2. A single pressure sensor 41 may be used. The single pressure sensor 41 may be located in the vacuum generator 6, preferably in a filter holder or other housing, for example the vacuum cone 40, of the vacuum generator.

The controller 9 controls operation of at least the vacuum generator 6 and the spray device 7. In Figure 1 operative connections between the controller 9 and a remainder of the apparatus 1 are omitted for clarity. However, the skilled person would be aware that necessary connections of any suitable means may be provided. Such connections may be wired or wireless.

The controller 9 may be configured to control the transfer of the dry powder 4 from the reservoir 3 to the spray device 7 by the transport device 8 independently of controlling the primary gas flow produced by the vacuum generator 6. For example, the controller 9 may control operation of the dosing device 15.

The controller 9 may be configured to control spraying of the dry powder 4 towards the inlet face of the filter 2 independently of controlling the primary gas flow. Use of the term 'independently' in the present specification refers to the ability of the controller 9 to control each of the variables of the spraying of the dry powder 4 and the primary gas flow individually and irrespective of the status of the other variable. For example, the controller 9 may establish the primary gas flow without simultaneously spraying the dry powder 4. For example, the controller 9 may increase or decrease the rate of spraying of the dry powder 4 without altering the volumetric flow rate of the primary gas flow. For example, the controller 9 may increase or decrease the volumetric flow rate of the primary gas flow without altering the rate of spraying of the dry powder 4. For example, the controller 9 may control operation of the spray device 7 independently of controlling operation of the vacuum pump 42.

The controller 9 may be configured to operate the vacuum generator 6 to establish the primary gas flow before the dry powder 4 is transferred to the spray device 7 and sprayed towards the inlet face of the filter 2.

The controller 9 may be configured to control the secondary gas flow generator, for example the compressor 22, independently of the vacuum generator 6. The controller 9 may be configured to operate the vacuum generator 6 to maintain the primary gas flow as a continuous gas flow through the porous structure and to operate the secondary gas flow generator, for example the compressor 22, for only a portion of a period of the primary gas flow.

The controller 9 may be configured to control the vacuum generator 6 to control a level of the pressure reduction applied to the outlet face of the filter 2 independently of controlling the transport device 8 and/or the spray device 7 to control a speed or mass rate of the dry powder 4 sprayed towards the inlet face of the filter 2.

The controller 9 may be configured to stop the spraying of the dry powder 4 towards the inlet face of the filter 2 when a pre-determined back pressure of the filter 2 is reached, for example as detected by the pressure sensor 41. The pre-determined back pressure may be an absolute back pressure or alternatively may be a relative back pressure.

The controller 9 may be configured to stop the spraying of the dry powder 4 towards the inlet face of the filter 2 when a pre-determined total spraying time is reached.

The apparatus 1 may be used to treat a filter with a dry powder 4 comprising or consisting of a metal compound for forming by thermal decomposition a metal oxide. The dry powder 4 may consist of a single metal compound of may consist of a mixture or blend or successive doses of two or more metal compounds. The or each metal compound may contain one or more metal cations. Where a plurality of metal cations is present these may be of the same or of different metals.

In examples the metal compound may comprise or consist of a metal hydroxide, a metal phosphate, a metal carbonate, a metal sulphate, a metal perchlorate, a metal iodide, a metal oxalate, a metal acetate, a metal chlorate or a mixture thereof.

By way of example the metal of the metal compound may comprise or consist of one or more of magnesium, calcium, strontium, barium, aluminium, zirconium, manganese, lithium, iron, cobalt, nickel, copper, or gallium.

The dry powder 4 may additionally comprise a metal oxide or mixed metal oxide. Preferably the dry powder 4 comprises 90 wt% or greater of the metal compound for forming by thermal decomposition a metal oxide and 10 wt% or less of the metal oxide or mixed metal oxide. More preferably the dry powder 4 comprises 95 wt% or greater of the metal compound for forming by thermal decomposition a metal oxide and 5 wt% or less of the metal oxide or mixed metal oxide. Optionally the dry powder 4 comprises 99 wt% or greater of the metal compound for forming by thermal decomposition a metal oxide and 1 wt% or less of the metal oxide or mixed metal oxide.

By way of example the metal of the metal oxide or mixed metal oxide may comprise or consist of one or more of aluminium, magnesium, calcium, strontium, barium, aluminium, zirconium, manganese, lithium, iron, cobalt, nickel, copper, or gallium.

Preferably the dry powder 4 comprises or consists of a metal hydroxide, a metal phosphate, a metal carbonate or a mixture thereof. The metal hydroxide may be selected from the group consisting of magnesium hydroxide, calcium hydroxide, strontium hydroxide and barium hydroxide. The metal phosphate may be selected from the group consisting of magnesium phosphate, calcium phosphate, strontium phosphate and barium phosphate. The metal carbonate may be selected from the group consisting of magnesium carbonate, calcium carbonate, strontium carbonate and barium carbonate.

The dry powder 4 may have a tapped density of 1 to 3 g/cm³, optionally 1.5 to 2.5 g/cm³, optionally about 2 g/cm³. The dry powder 4 preferably has a d50 (by volume) less than 10 microns, optionally less than 5 microns, optionally about 2 microns.

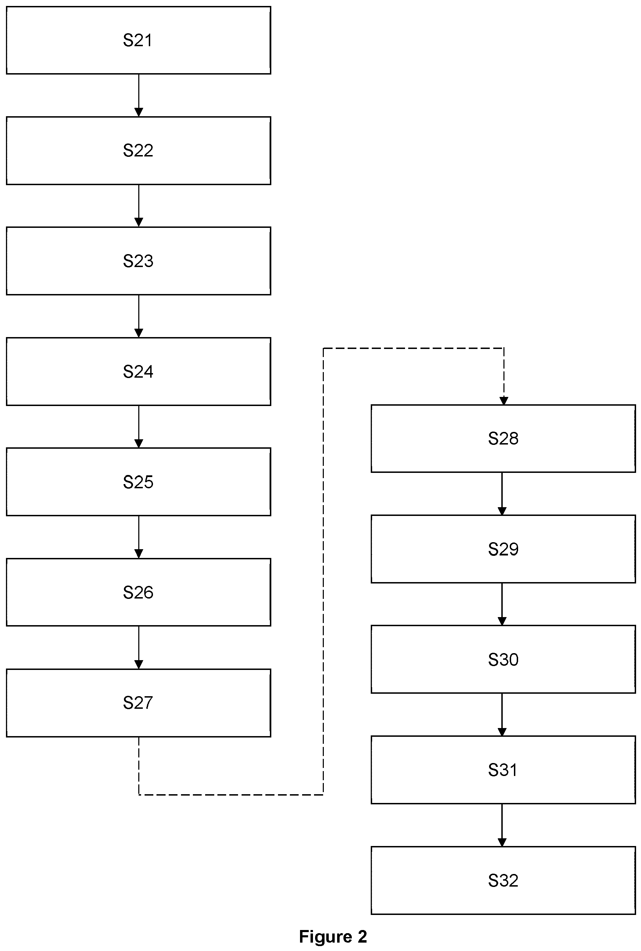

An example of a method of treating a filter in accordance with the present disclosure will now be described with reference to Figure 2 which shows a flow diagram illustrating a method for manufacturing a filter 2 incorporating use of the apparatus 1. By way of example only the method will be described with reference to a filter 2 provided with a catalytic coating.

In step S21 a catalytic slurry is prepared by methods as known in the art.

In step S22 a washcoat is prepared from the catalytic slurry by methods as known in the art. The washcoat may be, for example, a hydrocarbon trap, a three-way catalyst (TWC), a NOx absorber, an oxidation catalyst, a selective catalytic reduction (SCR) catalyst, a lean NOx catalyst and combinations of any two or more thereof.

In step S23 the washcoat is dosed and applied to a bare filter 2 by methods as known in the art. For example the washcoat may be applied to a first face of the filter 2 (e.g. an upper face) and an opposite, second face (e.g. a lower face) of the filter 2 may be subjected to at least a partial vacuum to achieve movement of the washcoat through the porous structure of the filter 2. The filter 2 may be coated in a single dose wherein washcoat may be applied to the filter 2 in a single step with the filter 2 remaining in a single orientation. Alternatively, the filter 2 may be coated in two doses. For example, in a first dose the filter 2 may be in a first orientation with a first face uppermost and a second face lowermost. A coating may be applied to the first face and coats a portion of the length of the filter 2. The filter 2 may then be inverted so that the second face is uppermost. A coating may then be applied to the second face in order to coat the portion of the filter 2 that was uncoated by the first dose. Beneficially, a two-dose process may allow different coatings to be applied to each end of the filter 2.

In step S24 the filter 2 may be dried.

In step S25 the filter 2 may be calcined by methods as known in the art.

In optional step S26 the back pressure of the filter 2 before treatment may be measured.

In optional step S27 the filter 2 may be placed in stock to await treatment. Thereafter, in step S28 the filter 2 may be removed from stock and passed for treatment. Alternatively, the filter 2 may be treated immediately, i.e. by proceeding directly to step S29.

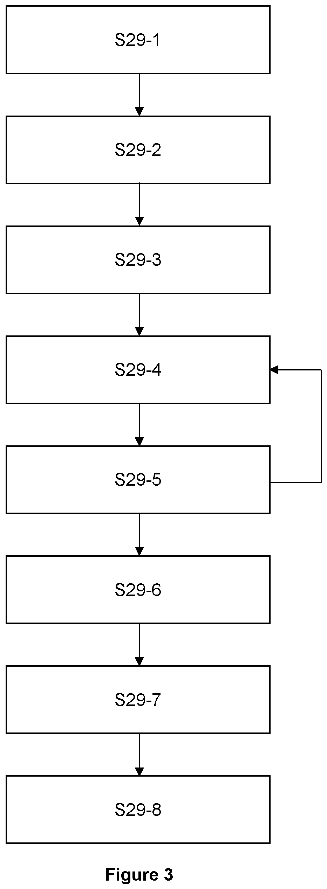

In step S29 the filter 2 is treated according to the present disclosure as will be described in further detail below with reference to Figure 3.

In step S30, after treatment, the filter 2 may be calcined.

Calcining the filter may be carried out at a temperature selected to produce thermal decomposition of the dry powder 4.

The calcination temperature may be selected to be at least 150°C, optionally at least 250°C, optionally at least 500°C.

In some embodiments it is preferred that the calcination temperature is no greater than 550°C. However, in other embodiments, the calcination temperature may be selected to be greater than 550°C. The calcination temperature may be selected to be up to 900°C, optionally up to 1150°C.

In one example the calcination temperature may be selected to be between 300°C and 500°C. In another example the calcination temperature may be selected to be about 520°C. In another example the calcination temperature may be selected to be about 580°C. In another example the calcination temperature may be selected to be about 900°C.

The calcination may be carried out for a period of 30 to 90 minutes, optionally 30 to 60 minutes. In one example the period is about 35 minutes. In another example the period is about 60 minutes. Within the calcination, the dwell time of 1 to 15 minutes, preferably 5 to 10 minutes

In optional step S31 the back pressure of the filter 2 after treatment may be measured.

In step S32 the finished filter 2 may be readied for delivery to a customer.

Figure 3 shows a flow diagram illustrating the treatment of step S29 of Figure 2.

In step S29-1 the filter may be loaded into the filter holder 5. The filter 2 may be held in a stationary position during treatment. The filter 2 may be gripped by the filter holder 5 at an upper and/or a lower end of the filter 2. The inflatable upper seal bladder 31 and the inflatable lower seal bladder 30 may be inflated to contact and/or engage with the exterior surface of the filter 2. The filter 2 may be held in a vertical orientation with the inlet face of the filter uppermost. Operation of the filter holder 5, for example inflation of the inflatable upper seal bladder 31 and the inflatable lower seal bladder 30 may be controlled by the controller 9.

In step S29-2 the vacuum generator 6 may activated by the controller 9 to establish the primary gas flow through the filter 2. Preferably, the primary gas flow is established before the dry powder 4 is transferred to the spray device 7 and sprayed towards the inlet face of the filter 2. A level of the pressure reduction generated by the vacuum generator 6 may be controlled by the controller 9 independently of a speed or mass rate of the transfer of the dry powder 4 from the reservoir 3 to the spray device 7. The primary gas flow may have a volumetric flow rate of 10 m³/hr to 5,000 m³/hr, preferably 400 m³/hr to 2,000 m³/hr, preferably 600 m³/hr to 1000 m³/hr.

In step S29-3 the back pressure of the filter 2 may be measured while the primary gas flow is established but before the secondary gas flow is established. The back pressure may be measured by use of the pressure sensor 41. The back-pressure measurement in step S29-3 may be in addition to, or in place of the back-pressure measurement of step S26. Alternatively, the back-pressure measurement of step S26 may be used in place of the back-pressure measurement of step S29-3. The back-pressure measurement of step S26 and/or the back-pressure measurement of step S29-3 may be used by the controller 9 as a measure of a first back pressure of the filter 2 prior to treatment.

In step S29-4 the dry powder 4 is sprayed at the inlet face of the filter 2 by the spray device 7. During spraying of the dry powder 4 the dry powder 4 may be supplied to the spray device 7 by the transport device 8.

The spraying of the dry powder 4 towards the inlet face of the filter 2 is preferably controllable by the controller 9 independently of establishing and controlling the primary gas flow.

During step S29-4 the secondary gas flow, for example supplied by the compressor 22, which is separate to the primary gas flow, may be used to transfer the dry powder 4 from the reservoir 3 to the spray device 7. Preferably the secondary gas flow is controllable by the controller 9 independently of the primary gas flow. For example, the controller 9 may control operation of the compressor 22 and/or the valves and/or the nozzle 25 of the spray device 7 independently of controlling operation of the vacuum pump 42. The dry powder 4 may be sprayed towards the inlet face of the filter 2 by use of the secondary gas flow. The secondary gas flow may comprise a flow of compressed gas, preferably air.

During step S29-4 the primary gas flow is preferably maintained as a continuous flow. During step S29-4 the secondary gas flow may be applied as a single burst or a plurality of intermittent bursts.

In step S29-5 the back pressure of the filter 2 may be monitored. The back pressure may be monitored by use of the pressure sensor 41. The controller 9 may be configured to stop the spraying of the dry powder 4 towards the inlet face of the filter 2 when a pre-determined back pressure is reached. If the pre-determined back pressure has not yet been reached, then the controller 9 be configured to return to step S29-4 and continue spraying of the dry powder 4. This feedback may be continuous and need not involve any pause in the spraying of the dry powder 4, i.e. the controller 9 may continuously monitor the back pressure of the filter 2 as spraying of the dry powder 4 is on-going.

The pre-determined back pressure may be an absolute back pressure. The absolute back pressure may be between 20-180 mbar at a flowrate of 600 m³/hr.

Alternatively, the pre-determined back pressure may be a relative back pressure. For example, a back pressure relative to the first back pressure of the filter 2 prior to treatment measured in step S26 and/or step S29-3 may be used. The back pressure may be measured as a percentage of the first back pressure. The predetermined back pressure when spraying of the dry powder 4 is stopped may be from 105% to 200%, preferably 125% to 150%, of the first back pressure.

In addition, or alternatively, spraying of the dry powder 4 towards the inlet face of the filter 2 may be stopped when a pre-determined total spraying time is reached. The pre-determined total spraying time may be from 1 to 60 seconds, preferably from 1 to 20 seconds, preferably about 10 seconds.

The controller 9 may be configured to stop the spraying of the dry powder 4 towards the inlet face of the filter 2 when either a pre-determined total spraying time or a pre-determined back pressure of the filter is first reached or a target mass of the dry powder has been sprayed towards the inlet face of the filter.

In step S29-6 the spraying of the dry powder 4 is stopped. For example, this may be achieved by the controller 9 stopping transfer of the dry powder by the transport device 8 and/or by stopping the secondary gas flow of the spray device 7. Preferably in step S29-6 the primary gas flow is maintained through the porous structure of the filter 2 for a time period after the stopping of the spraying of the dry powder 4. The controller 9 may be configured to operate the vacuum generator 6 for a time period after the stopping of the spraying of the dry powder 4.

Optionally, in step S29-6 the quantity of dry powder 4 delivered towards the inlet face of the filter 2 may be measured. The controller 9 be configured to determine the quantity of the dry powder 4 delivered from signal outputs from the dosing device 15, for example from an output from the loss in weight feeder.

The method may be configured to deliver a maximum loading of the filter of 10 to 40 g/l, optionally 15 to 30 g/l, optionally about 20 g/l of the dry powder 4.

In step S29-7 the primary gas flow through the filter 2 is stopped. This may be achieved by the controller 9 stopping the vacuum generator 6, i.e. stopping the vacuum pump 42. Alternatively, this may be achieved by the controller operating valves of the vacuum generator 6 to divert the suction through the bypass conduit 46 to draw air in through intake 47. This may avoid the need to stop the vacuum pump 42 between treatments of successive filters 2 which may lead to a faster cycle time.

In step S29-8 the filter 2 is unloaded from the filter holder 5 by, for example, deflating the inflatable upper seal bladder 31 and the inflatable lower seal bladder 30. The filter 2 may then be removed and passed to step S30 as described above.

According to the present disclosure a treated filter may be provided having one or more advantages compared to prior art filters. Preferably, but not exclusively, the treated filter may be treated according to the method of the present disclosure and or treated using the apparatus according to the present disclosure.

### EXAMPLES

### Standard Loading Process

In the following examples the treated filters were loaded with a dry powder using the following 'standard' loading process using an apparatus of the type shown in Figure 1, unless otherwise specified.
1 The diameter of the flow conduit was the same as the inlet face of the filter.
2 A primary gas flow of 550 m³/hr of air was pulled through the filter using a downstream regenerative blower.
3 Back pressure was monitored with a Wika® P30 pressure transmitter located below the filter.
4 The dry powder was dispersed into the primary gas flow using a STAR Professional gravity feed spray gun 1.4mm part no. STA2591100C. The STAR Professional gravity feed spray gun was mounted 100 mm from the inlet face of the filter.
5 After loading was completed the filter was calcined at 520°C for 35 minutes.

In cases where the back-pressure parameter was used to determine the point of stopping of spraying of the refractory powder, the back pressure was monitored using the above-noted pressure transmitter.

In the following examples 'CFBP' refers to Cold Flow Back Pressure in mbar at 600m³/hr and all filtration efficiencies are quoted at 0.02 g/l soot loading.

In the following examples the porous substrate was a GPF filter prepared from a cordierite 300/8, 1.26L substrate type. Each filter was bare without an applied washcoat.

All filters were loaded using the Standard Loading Process (SLP) described above with a target back pressure of about 55 mbar used to determine the point of stopping of spraying of the dry powder.

### Example 1

The dry powder used was Aeroxide® Alu130 fumed aluminium oxide, available from Evonik Industries AG of Essen, Germany. Tapped density was 0.05 g/l and d50 was 5.97 microns. The loading level was about 2 g/l.

### Example 2

The dry powder used was calcium hydroxide powder. Tapped density was about 2.2 g/cm³. The loading level was about 24 g/l.

### Example 3

The dry powder used was magnesium hydroxide powder. Tapped density was about 2.3 g/cm³. The loading level was about 18 g/l.

### Example 4

The dry powder used was magnesium phosphate powder. Tapped density was about 2.2 g/cm³. The loading level was about 7.5 g/l.

### Example 5

The dry powder used was a mixture of 50 wt% magnesium hydroxide powder and 50 wt% Aeroxide® Alu130.

### Example 6

The dry powder used was a mixture of 95 wt% magnesium hydroxide powder and 5 wt% Aeroxide® Alu130.

### Cold Flow Back Pressure (CFBP)

The CFBP of the filters at 600 m³/hr was tested after the Standard Loading Process (SLP) was completed. The filters were then subjected to an adhesion test on an Adhesion Test Rig (ATR). The CFBP of the filters at 600 m³/hr was then re-measured.

The following results were obtained:

| | Powder used | CFBP after SLP (mbar) | CFBP after ATR (mbar) | Change in CFBP (mbar) |
|---|---|---|---|---|
| Example 1 | Aeroxide® Alu130 | 54.9 | 51.8 | -3.1 |
| Example 2 | Calcium hydroxide | 51.0 | 50.8 | +0.2 |
| Example 3 | Magnesium hydroxide | 56.8 | 57.5 | +0.7 |
| Example 4 | Magnesium phosphate | 54.7 | 55.0 | +0.3 |

The adhesion test can be used to assess the adhesion of the dry powder to the porous substrate. A large reduction in the CFBP after the adhesion test on the ATR is indicative of the dry powder being de-adhered from the porous substrate. This is believed to be a result of de-adhesion of the dry powder leading to unblocking of at least some of the pores of the porous substrate, thus reducing the CFBP.

As can be seen from the results, when aluminium oxide is used as the dry powder there is a significant reduction in the CFBP - indicative of significant de-adhesion of some of the dry powder. By contrast the examples using calcium hydroxide, magnesium hydroxide or magnesium phosphate as the dry powder show no reduction in the CFBP. This is indicative of good adhesion of these dry powders.

### Soot Loaded Back Pressure

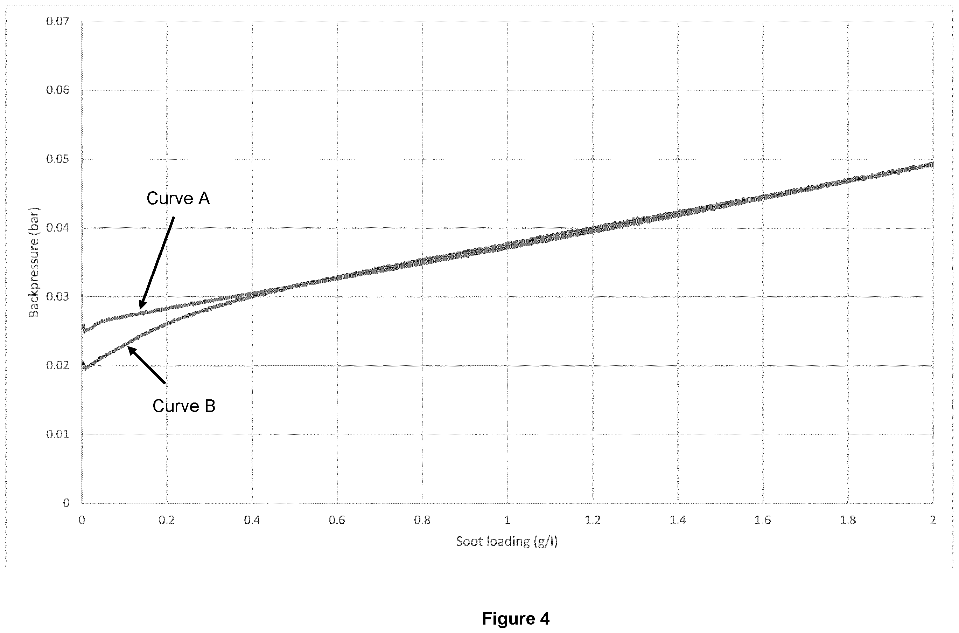

Figure 4 is a graph showing soot loading - back pressure response curves for Example 1. Curve A is after completion of the SLP and Curve B is after an adhesion test on the ATR.

Curve A exhibits a substantially linear loading-back pressure response for soot loadings greater than only 0.1 g/l. Without wishing to be bound by theory it is believed that the dry powder, which is preferably aerosol-deposited, provides a highly efficient filtering medium for the filter during initial use and, where appropriate, after regeneration even at very low soot loadings, where no particulate cake of soot would have been yet built-up.

However, Curve B shows a markedly lower back pressure at the initial stages of soot loading up to about 0.4 g/l. This response is indicative that some of the dry powder in Example 1 has been de-adhered by the adhesion test and is no longer providing such a cohesive, porous structure on the wall of the porous substrate. Without wishing to be bound by theory it is believed that the de-adhesion of some of the dry powder may allow soot particles to penetrate into the pores of the porous substrate resulting in the observed nonlinear response to back pressure.

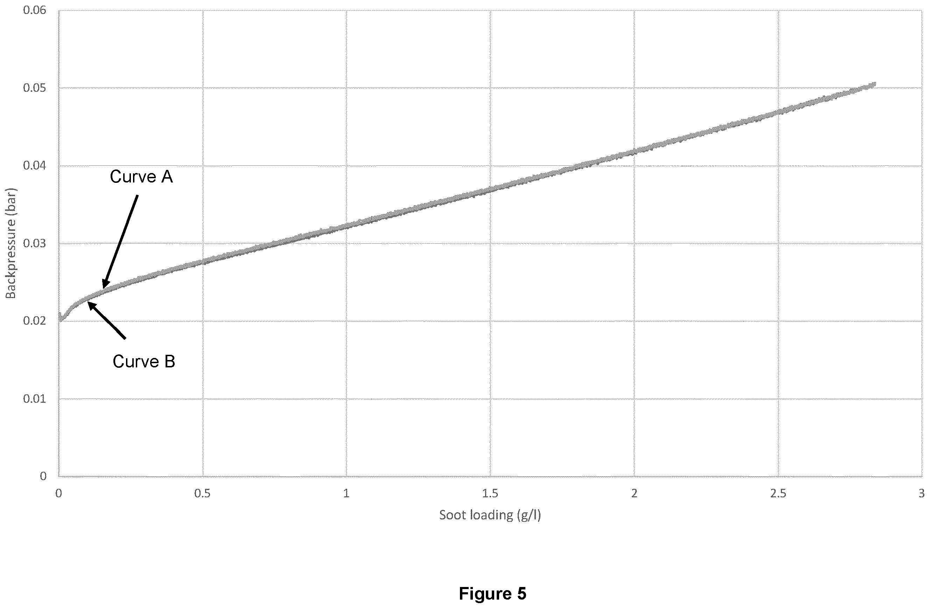

Figure 5 is a graph showing soot loading - back pressure response curves for Example 2. Curve A is after completion of the SLP and Curve B is after an adhesion test on the ATR. Curves A and B both exhibit substantially the same response with a substantially linear loading-back pressure response for soot loadings greater than only 0.1 g/l. This response is indicative that the dry powder in Example 2 has remained adhered to the porous structure after the adhesion test. Thus, beneficially in Example 2 the highly efficient filtering medium provided by the dry powder is maintained even after the adhesion test.

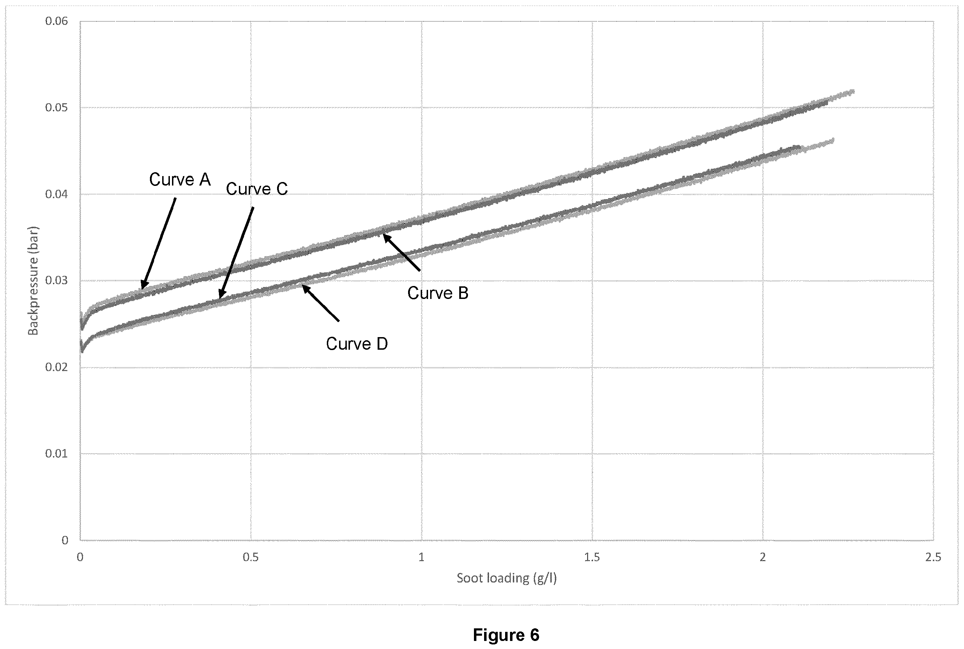

Figure 6 is a graph showing soot loading - back pressure response curves for Examples 3 and 4. Curve A is Example 3 after completion of the SLP, Curve B is Example 3 after an adhesion test on the ATR. Curve C is Example 4 after completion of the SLP, Curve D is Example 4 after an adhesion test on the ATR. Curves A and B and curves C and D both exhibit substantially the same response with substantially linear loading-back pressure responses for soot loadings greater than only 0.1 g/l. This response is indicative that the dry powder in Examples 3 and 4, similar to Example 2, has remained adhered to the porous structure after the adhesion test. Thus, beneficially in Examples 3 and 4 the highly efficient filtering medium provided by the dry powder is maintained even after the adhesion test.

### Filtration Efficiency

The filtration efficiencies of the Examples were as follows:

| | Powder used | Filtration Efficiency after SLP (%) | Filtration Efficiency after ATR (%) |
|---|---|---|---|
| Example 1 | Aeroxide® Alu130 | 99.66 | 78.33 |
| Example 2 | Calcium hydroxide | 92.91 | 92.80 |
| Example 3 | Magnesium hydroxide | 99.12 | 98.65 |
| Example 4 | Magnesium phosphate | 98.20 | 96.68 |

As can be seen from the results, while the filtration efficiency of Example 1 is high after the SLP if falls significantly after the adhesion test indicating significant de-adhesion of the dry powder.

With Examples 2 to 4 there is no significant reduction in filtration efficiency indicating that adhesion of the dry power is maintained.

Filtration efficiency was also assessed for dry powders comprising a mixture of metal compounds. The results obtained were as follows:

| | Powder used | Filtration Efficiency after SLP (%) | Filtration Efficiency after ATR (%) |
|---|---|---|---|
| Example 1 | Aeroxide® Alu130 100 wt% | 99.7 | 78.3 |
| Example 5 | Magnesium hydroxide 50 wt%: Aeroxide® Alu130 50 wt% | 99.6 | 78.6 |
| Example 6 | Magnesium hydroxide 95 wt%: Aeroxide® Alu130 5 wt% | 99.6 | 92.9 |

As can be seen, compared to Examples 1 and 5, Example 6 demonstrates a significantly reduced drop in filtration efficiency indicating that where a mixture of metal compounds is used it may be beneficial to limit a metal oxide component of the mixture to 5 wt% or less.

### Hydrothermal Ageing

The CFBP and filtration efficiencies for Examples 3 and 4 were tested after hydrothermal ageing (HTA) at 1100°C for 4 hours. The following results were obtained:

| | Powder used | CFBP after ATR (mbar) | CFBP after HTA (mbar) | Filtration Efficiency after ATR (%) | Filtration Efficiency after HTA (%) |
|---|---|---|---|---|---|
| Example 3 | Magnesium hydroxide | 57.5 | 54.1 | 98.65 | 95.90 |
| Example 4 | Magnesium phosphate | 55.0 | 48.3 | 96.68 | 62.80 |

As can be seen from the results, in Example 4 a drop in CFBP and a significant reduction in filtration efficiency is found after HTA. For Example 3 no such deleterious effects of HTA are seen, showing that magnesium hydroxide is a very preferable option for the dray powder.

Further benefits and effects of the methods and filters of the present disclosure may be observed from the following data and examples:
Ambient X-Ray Diffraction (XRD) analysis was carried out on three filters using a Bruker D8 Advance, Davinci design diffractometer fitted with a 90-position sample changer for measurements in reflection mode. One filter was left bare. Two filters were each loaded with magnesium hydroxide dry powder. One of these two filters was left uncalcined and the other filter was calcined prior to the analysis.

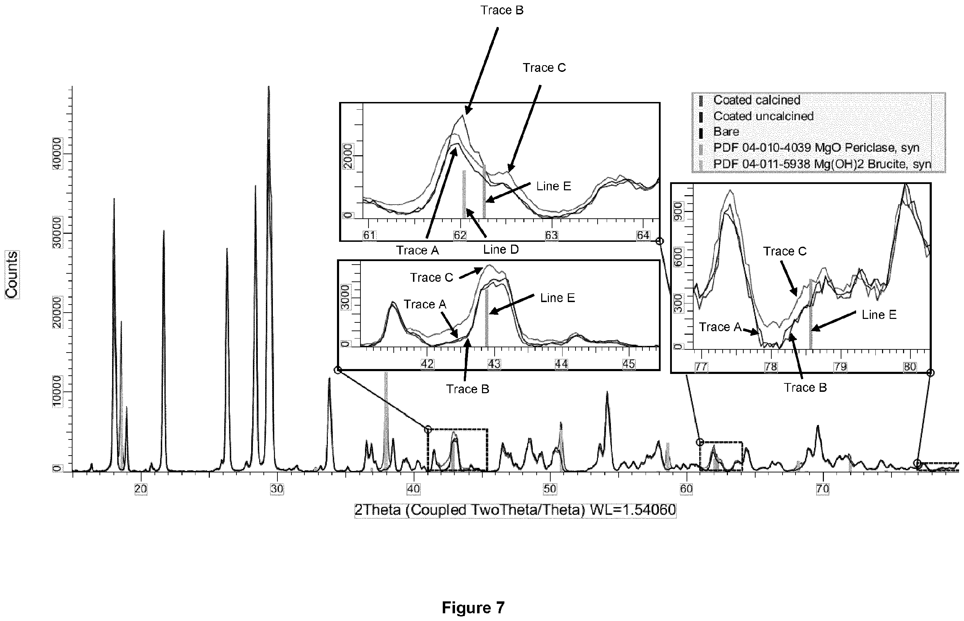

Figure 7 shows the XRD comparison of the bare filter (trace A), uncalcined filter (trace B) and calcined filter (trace C) with highlighted phases present. The uncalcined and calcined filters show to have the same filter phases present in comparison to the bare filter. The uncalcined filter (trace B) shows the presence of Mg(OH)₂, *Brucite,* (line D). Upon calcination there is the loss of *Brucite* and there is evidence for the presence of poorly crystalline MgO, *Periclase,* (lines E) being formed on the calcined filter (trace C).

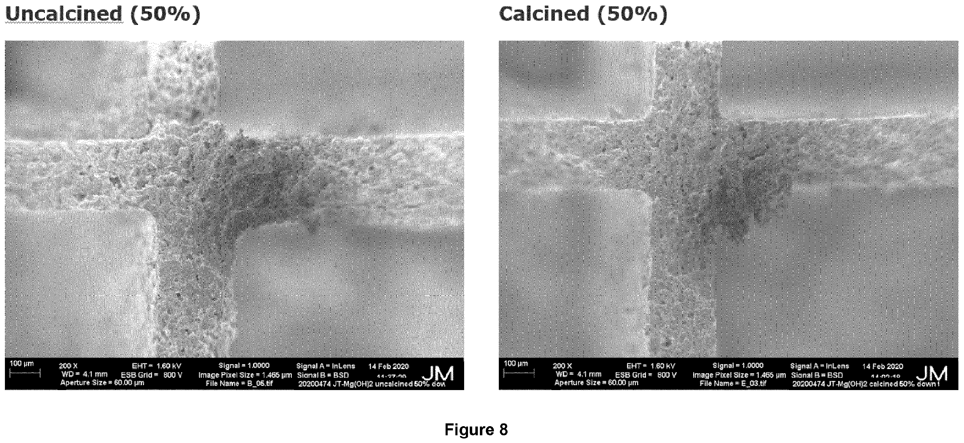

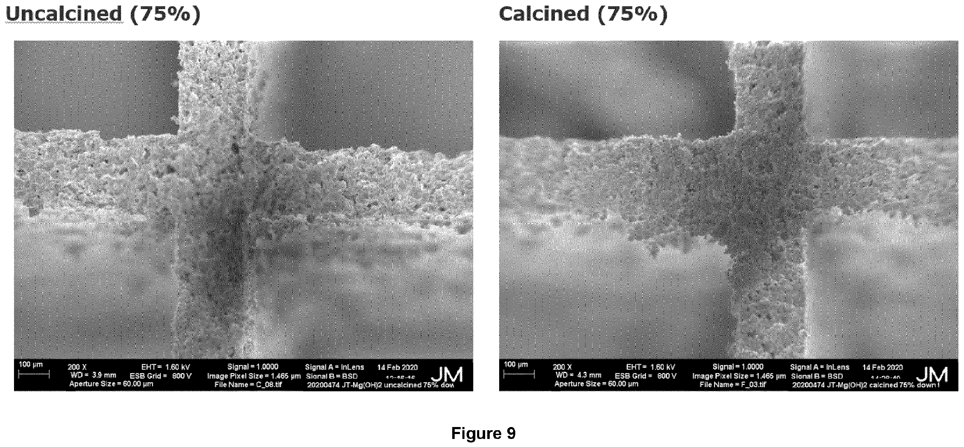

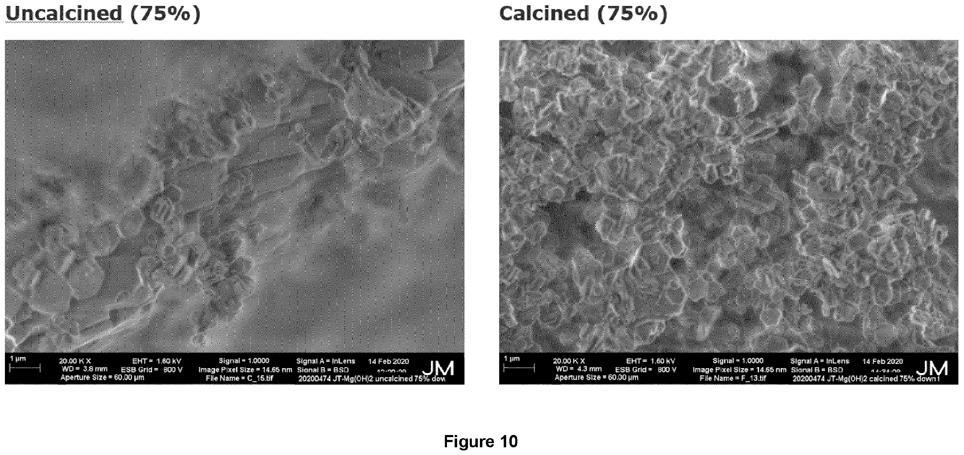

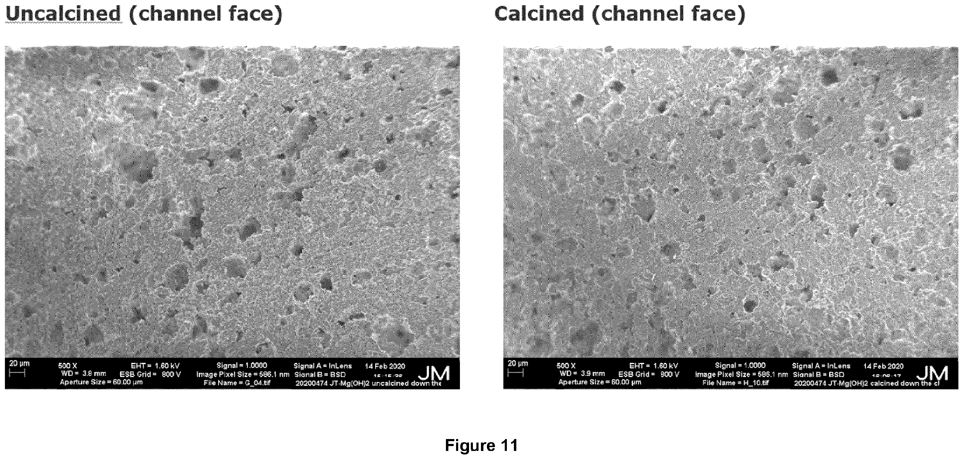

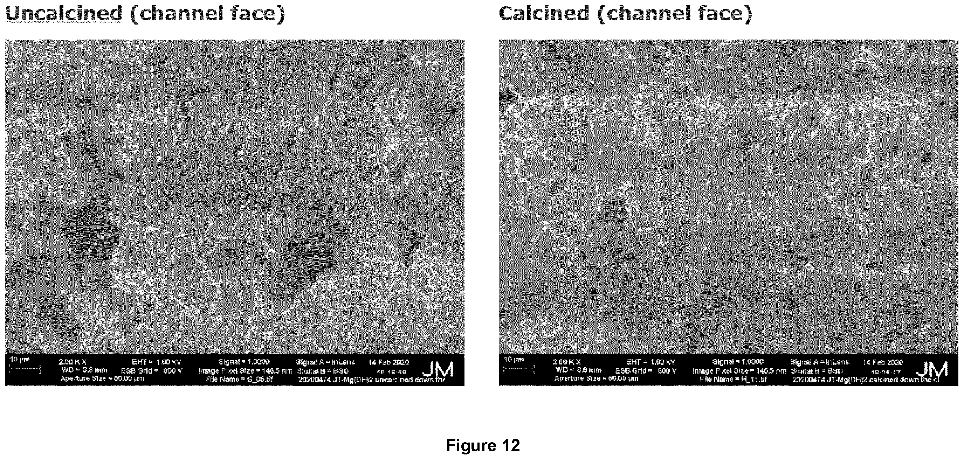

Figures 8 to 12 show SEM micrographs for uncalcined and calcined filters each loaded with magnesium hydroxide dry powder. Figure 8 is taken 50% down the filter channel of the filter, Figures 9 and 10 are taken 75% down the filter channel of the filter, and Figures 11 and 12 are taken at the channel face of the filters.

The effect of calcination on the surface of the magnesium hydroxide powder can be observed.

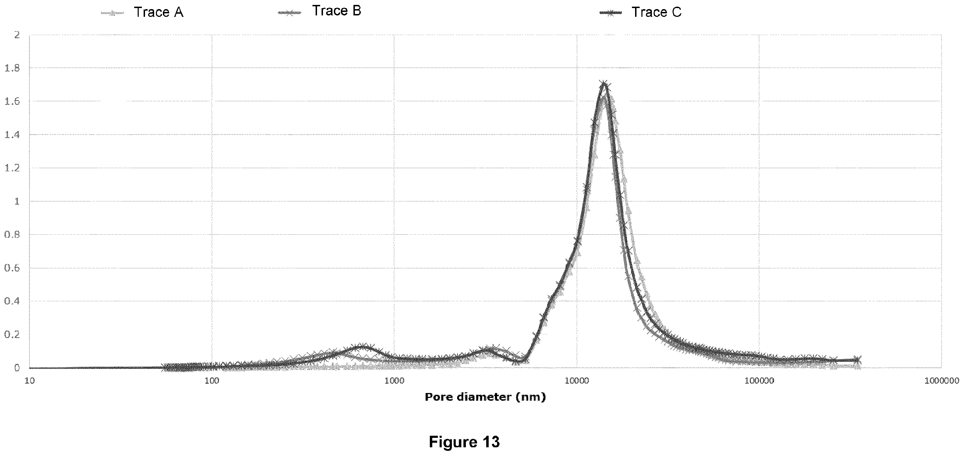

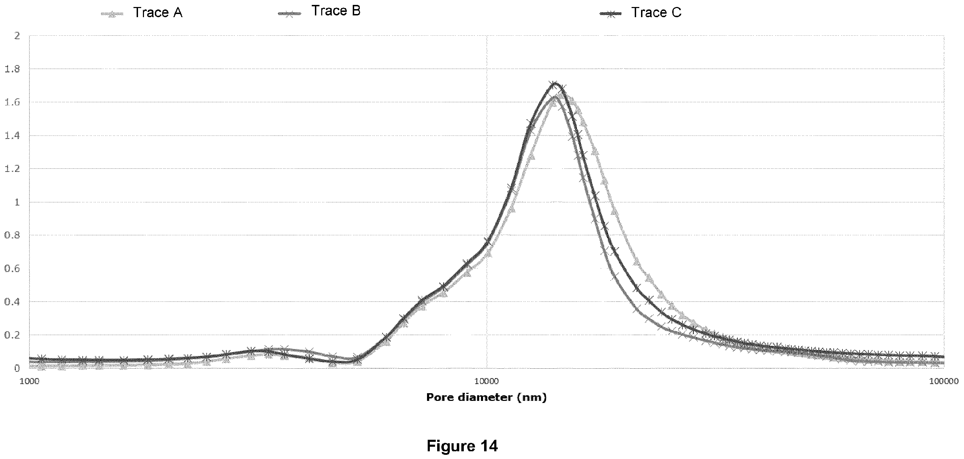

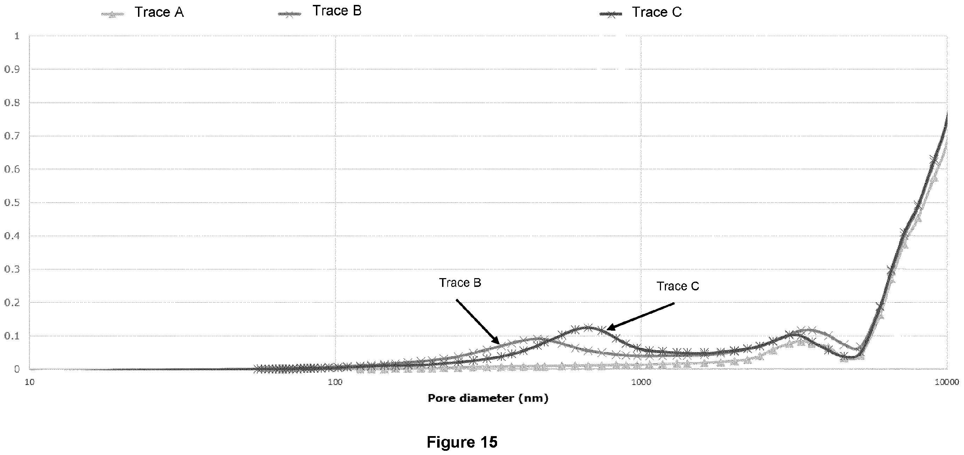

Mercury porosimetry analysis was carried out on three filters. One filter was left bare. Two filters were each loaded with magnesium hydroxide dry powder. One of these two filters was left uncalcined and the other filter was calcined prior to the analysis. Figures 13 to 15 show the results. Figure 13 shows the Hg porosimetry results for the bare filter (Trace A), the uncalcined filter (Trace B) and the calcined filter (Trace C). Figure 14 is an enlarged section of the results showing the substrate peaks of the filters. Figure 15 is an enlarged section of the results showing the powder peaks for the uncalcined and calcined filters.

The porosity of the bare filter was 64%. The porosity of the uncalcined filter was 58%. The porosity of the calcined filter was 61%. It can be observed in Figure 15 how the pore diameter of the calcined filter has increased compared to the uncalcined filter.

Further aspects and embodiments of the present disclosure are set out in the following clauses:
Clause A1. A method for treating a filter for filtering particulate matter from exhaust gas, the method comprising the steps of:
   a) containing a dry powder in a reservoir;
   b) locating a filter in a filter holder, the filter comprising a porous substrate having an inlet face and an outlet face, the inlet face and the outlet face being separated by a porous structure;
   c) establishing a primary gas flow through the porous structure of the filter by applying a pressure reduction to the outlet face of the filter;
   d) transferring the dry powder from the reservoir to a spray device located upstream of the inlet face of the filter; and
   e) spraying the dry powder, using the spray device, towards the inlet face of the filter such that the dry powder is entrained in the primary gas flow and passes through the inlet face of the filter to contact the porous structure;
   wherein the dry powder comprises or consists of a metal compound for forming by thermal decomposition a metal oxide.
Clause A2. The method of clause A1, wherein the metal compound comprises or consists of a metal hydroxide, a metal phosphate, a metal carbonate, a metal sulphate, a metal perchlorate, a metal iodide, a metal oxalate, a metal acetate, a metal chlorate or a mixture thereof.
Clause A3. The method of clause A1 or A2, wherein the metal of the metal compound comprises or consists of one or more of magnesium, calcium, strontium, barium, aluminium, zirconium, manganese, lithium, iron, cobalt, nickel, copper, or gallium.
Clause A4. The method of any preceding clause, wherein the dry powder additionally comprises a metal oxide or mixed metal oxide.
Clause A5. The method of clause A4, wherein the dry powder comprises 90 wt% or greater of the metal compound for forming by thermal decomposition a metal oxide and 10 wt% or less of the metal oxide or mixed metal oxide.
Clause A6. The method of clause A4, wherein the dry powder comprises 95 wt% or greater of the metal compound for forming by thermal decomposition a metal oxide and 5 wt% or less of the metal oxide or mixed metal oxide.
Clause A7. The method of clause A4, wherein the dry powder comprises 99 wt% or greater of the metal compound for forming by thermal decomposition a metal oxide and 1 wt% or less of the metal oxide or mixed metal oxide.
Clause A8. The method of any one of clauses A4 to A7, wherein the metal of the metal oxide or mixed metal oxide comprises or consists of one or more of aluminium, magnesium, calcium, strontium, barium, aluminium, zirconium, manganese, lithium, iron, cobalt, nickel, copper, or gallium.
Clause A9. The method of any preceding clause, wherein the dry powder comprises or consists of a metal hydroxide, a metal phosphate, a metal carbonate or a mixture thereof.
Clause A10. The method of any preceding clause, wherein the metal hydroxide is selected from the group consisting of magnesium hydroxide, calcium hydroxide, strontium hydroxide and barium hydroxide.
Clause A11. The method of any preceding clause, wherein the metal phosphate is selected from the group consisting of magnesium phosphate, calcium phosphate, strontium phosphate and barium phosphate.
Clause A12. The method of any preceding clause, wherein the metal carbonate is selected from the group consisting of magnesium carbonate, calcium carbonate, strontium carbonate and barium carbonate.
Clause A13. The method of any preceding clause, further comprising the step of:
   f) calcining the filter after step e).
Clause A14. The method of clause A13, wherein the calcining is at a temperature of at least 150°C, optionally at least 250°C, optionally at least 500°C.
Clause A15. The method of clause A13 or A14, wherein the calcining is at a temperature no greater than 550°C; alternatively at a temperature greater than 550°C; optionally at a temperature up to 900°C; optionally at a temperature up to 1150°C.
Clause A16. The method of any one of clauses A13 to A15, wherein the calcining is carried out for a period of 30 to 90 minutes, optionally 30 to 60 minutes and including a dwell time of 1 to 15 minutes, preferably 5 to 10 minutes.
Clause A17. The method of any preceding clause, further comprising before step b) coating the filter with a washcoat, preferably a catalyst washcoat.
Clause A18. The method of any preceding clause, comprising providing a maximum loading of 10 to 40 g/l, optionally 15 to 30 g/l, optionally about 20 g/l of the dry powder.
Clause A19. The method of any preceding clause, wherein the dry powder has a tapped density of 1 to 3 g/cm³, optionally 1.5 to 2.5 g/cm³, optionally about 2 g/cm³.
Clause A20. The method of any preceding clause, wherein the dry powder has a d50 (by volume) less than 10 microns, optionally less than 5 microns, optionally about 2 microns.
Clause A21. The method of any preceding clause, wherein the transfer of the dry powder from the reservoir to the spray device is controllable independently of establishing and controlling the primary gas flow; and optionally wherein the spraying of the dry powder towards the inlet face of the filter is controllable independently of establishing and controlling the primary gas flow.
Clause A22. The method of any preceding clause, wherein the primary gas flow is established before the dry powder is transferred to the spray device and sprayed towards the inlet face.
Clause A23. The method of any preceding clause, wherein in step d) a secondary gas flow, separate to the primary gas flow, is used to transfer the dry powder from the reservoir to the spray device.
Clause A24. The method of clause A23, wherein the secondary gas flow is controllable independently of the primary gas flow.
Clause A25. The method of clause A23 or clause A24, further comprising the step of f) stopping the spraying of the dry powder towards the inlet face of the filter; wherein the primary gas flow is a continuous gas flow from step c) to step f); wherein the secondary gas flow is applied only for a portion of the period from step c) to step f).
Clause A26. The method of clause A25, wherein the secondary gas flow is applied as a single burst or a plurality of intermittent bursts during said portion of the period from step c) to step f).
Clause A27. The method of clause A25 or clause A26, further comprising the step of g) maintaining the primary gas flow through the porous structure of the filter for a time period after the stopping of the spraying of the dry powder in step f).
Clause A28. The method of any one of clauses A23 to A27, wherein the secondary gas flow comprises a flow of compressed gas, preferably air.
Clause A29. The method of any one of clauses A23 to A28, wherein the secondary gas flow is used to transfer the dry powder from the reservoir to the spray device and to dispense the dry powder from the spray device.
Clause A30. The method of any one of clauses A23 to A29, wherein the spray device is a compressed air gun.
Clause A31. The method of any preceding clause, comprising using a vacuum generator to establish the primary gas flow through the porous structure of the filter.
Clause A32. The method of clause A31, wherein a level of the pressure reduction generated by the vacuum generator is controllable independently of a speed or mass rate of the transfer of the dry powder from the reservoir to the spray device.
Clause A33. The method of any preceding clause, wherein the primary gas flow has a volumetric flow rate of 10 m³/hr to 5,000 m³/hr, preferably 400 m³/hr to 2,000 m³/hr, preferably 600 m³/hr to 1000 m³/hr.
Clause A34. The method of any preceding clause, further comprising monitoring a back pressure of the filter during at least step e).
Clause A35. The method of clause A34, further comprising using a pressure sensor, preferably a single pressure sensor, to monitor the back pressure.
Clause A36. The method of clause A35, wherein the pressure sensor, preferably the single pressure sensor, is located in a filter holder or other housing fluidly connected to the outlet face of the filter.
Clause A37. The method of any one of clauses A34 to A36, further comprising the step of stopping the spraying of the dry powder towards the inlet face of the filter when a pre-determined back pressure of the filter is reached.
Clause A38. The method of clause A37, wherein the pre-determined back pressure is an absolute back pressure.
Clause A39. The method of any one of clauses A34 to A38, further comprising monitoring the back pressure of the filter during at least step c) and step e), preferably during at least steps c), d) and e).
Clause A40. The method of clause A39, further comprising using a pressure sensor, preferably a single pressure sensor, to monitor the back pressure.
Clause A41. The method of clause A40, wherein the pressure sensor, preferably the single pressure sensor, is located in a filter holder or other housing fluidly connected to the outlet face of the filter.
Clause A42. The method of clause A40 or clause A41, wherein the same pressure sensor, preferably the same single pressure sensor, is used to monitor the back pressure of the filter during at least steps c) and e).
Clause A43. The method of any one of clauses A39 to A42, further comprising the step of stopping the spraying of the dry powder towards the inlet face of the filter when a pre-determined back pressure of the filter is reached.
Clause A44. The method of clause A43, wherein the pre-determined back pressure is a relative back pressure.
Clause A45. The method of clause A44, wherein a first back pressure of the filter is measured in step c) before the dry powder is deposited in the porous structure and a second back pressure of the filter is measured in step e) during deposition of the dry powder in the porous structure, wherein the spraying of the dry powder is stopped when the second back pressure reaches a predetermined percentage of the first back pressure.
Clause A46. The method of clause A45, wherein the predetermined percentage is from 105% to 200%, preferably 125% to 150%.
Clause A47. The method of any one of clauses A1 to A33, further comprising the step of stopping the spraying of the dry powder towards the inlet face of the filter when a pre-determined total spraying time is reached.
Clause A48. The method of clause A47, wherein the pre-determined total spraying time is from 1 to 60 seconds, preferably from 1 to 20 seconds, preferably about 10 seconds.
Clause A49. The method of any preceding clause, further comprising the step stopping the spraying of the dry powder towards the inlet face of the filter when a target mass of the dry powder has been sprayed towards the inlet face of the filter.
Clause A50. The method of any one of clauses A1 to A33, further comprising the steps of monitoring a back pressure of the filter during at least step e) and stopping the spraying of the dry powder towards the inlet face of the filter when either a pre-determined total spraying time or a pre-determined back pressure of the filter is first reached.
Clause A51. The method of clause A50, wherein the pre-determined back pressure is an absolute back pressure.
Clause A52. The method of clause A50 or clause A51, further comprising monitoring the back pressure of the filter during at least step c) and step e), preferably during at least steps c), d) and e).
Clause A53. The method of clause A52, wherein the pre-determined back pressure is a relative back pressure.
Clause A54. The method of any preceding clause, wherein in step e) the dry powder is sprayed from one or more outlets of the spray device.
Clause A55. The method of clause A54, wherein the one or more outlets of the spray device comprise an aperture size of 1 to 10 mm.
Clause A56. The method of clause A54 or clause A55, wherein the dry powder is sprayed from one or more fixed outlets of the spray device.
Clause A57. The method of clause A54 or clause A55, wherein the dry powder is sprayed from one or more mobile outlets of the spray device, preferably from one or more oscillating outlets.
Clause A58. The method of any preceding clause, further comprising in step e) channelling the dry powder from the spray device to the inlet face of the filter within a flow conduit.
Clause A59. The method of clause A58, wherein the flow conduit provides an unimpeded flow path between the spray device and the inlet face of the filter.
Clause A60. The method of clause A58, wherein the flow conduit comprises a flow conditioner interposed between the spray device and the inlet face of the filter, the flow conditioner acting to promote dispersion of the dry powder within the gas flow.
Clause A61. The method of clause A60, wherein the flow conditioner comprises one or more of a static mixer, a mesh, a sieve, a baffle, and an orificed plate.
Clause A62. The method of any preceding clause, wherein the inlet face of the filter is located from 10 to 80 cm, preferably 15 to 20 cm from the spray device, and or the spray device is located at a distance from the inlet face of the filter that is up to 4 times a diameter of the inlet face of the filter.
Clause A63. The method of any preceding clause, further comprising in step d) dosing the dry powder from the reservoir.
Clause A64. The method of clause A63, wherein the dosing comprises dosing by one or more of by weight, by volume, by particle number, by time.
Clause A65. The method of clause A63 or clause A64, comprising gravimetrically feeding a dosing device with the dry powder.
Clause A66. The method of any one of clauses A63 to A65, wherein the dosing uses a loss in weight feeder.
Clause A67. The method of any preceding clause, wherein in step a) the dry powder is contained in one or more hoppers.
Clause A68. The method of any preceding clause, wherein in step b) the filter is located in the holder in a vertical orientation with the inlet face uppermost.
Clause A69. The method of clause A68, wherein in step d) the spray device is located vertically above the inlet face; and preferably a spray direction of the spray device is co-axial with a longitudinal axis of the filter; and preferably the spray direction and the longitudinal axis are coincident.
Clause A70. The method of any preceding clause, wherein the porous substrate is a wall-flow filter.
Clause B1. A filter obtainable by the method of any one of clauses A1 to A70.
Clause B2. The filter of clause B1 which is one or more of a catalysed soot filter (CSF), a selective catalytic reduction filter (SCRF), a lean NOx trap filter (LNTF), and a gasoline particulate filter (GPF).
Clause C1. A calcined vehicular exhaust filter comprising a porous substrate having an inlet face and an outlet face, the porous substrate comprising inlet channels extending from the inlet face and outlet channels extending from the outlet face; the inlet channels and the outlet channels being separated by a plurality of filter walls having a porous structure;
   the vehicular exhaust filter being loaded prior to calcination with an aerosol-deposited dry powder comprising or consisting of a metal compound for forming by thermal decomposition a metal oxide.
Clause C2. The calcined vehicular exhaust filter of clause C1, wherein the metal compound comprises or consists of a metal hydroxide, a metal phosphate, a metal carbonate, a metal sulphate, a metal perchlorate, a metal iodide, a metal oxalate, a metal acetate, a metal chlorate or a mixture thereof.
Clause C3. The calcined vehicular exhaust filter of clause C1 or clause C2, wherein the metal of the metal compound comprises or consists of one or more of magnesium, calcium, strontium, barium, aluminium, zirconium, manganese, lithium, iron, cobalt, nickel, copper, or gallium.
Clause C4. The calcined vehicular exhaust filter of any one of clauses C1 to C3, wherein the dry powder additionally comprises a metal oxide or mixed metal oxide.
Clause C5. The calcined vehicular exhaust filter of clause C4, wherein the dry powder comprises 90 wt% or greater of the metal compound for forming by thermal decomposition a metal oxide and 10 wt% or less of the metal oxide or mixed metal oxide.
Clause C6. The calcined vehicular exhaust filter of clause C4, wherein the dry powder comprises 95 wt% or greater of the metal compound for forming by thermal decomposition a metal oxide and 5 wt% or less of the metal oxide or mixed metal oxide.
Clause C7. The calcined vehicular exhaust filter of clause C4, wherein the dry powder comprises 99 wt% or greater of the metal compound for forming by thermal decomposition a metal oxide and 1 wt% or less of the metal oxide or mixed metal oxide.
Clause C8. The calcined vehicular exhaust filter of any one of clauses C4 to C7, wherein the metal of the metal oxide or mixed metal oxide comprises or consists of one or more of aluminium, magnesium, calcium, strontium, barium, aluminium, zirconium, manganese, lithium, iron, cobalt, nickel, copper, or gallium.
Clause C9. The calcined vehicular exhaust filter of any one of clauses C1 to C8, wherein the metal compound comprises of consists of a metal hydroxide, a metal phosphate or a mixture thereof.
Clause C10. The calcined vehicular exhaust filter of clause C9, wherein the metal hydroxide is selected from the group consisting of magnesium hydroxide, calcium hydroxide, strontium hydroxide and barium hydroxide.
Clause C11. The calcined vehicular exhaust filter of clause C9 or clause C10, wherein the metal phosphate is selected from the group consisting of magnesium phosphate, calcium phosphate, strontium phosphate and barium phosphate.
Clause C12. The calcined vehicular exhaust filter of any one of clauses C9 to C11, wherein the metal carbonate is selected from the group consisting of magnesium carbonate, calcium carbonate, strontium carbonate and barium carbonate.
Clause C13. The calcined vehicular exhaust filter of any one of clauses C1 to C12, wherein a mass loading of the aerosol-deposited dry powder is 10 to 40 g/l, optionally 15 to 30 g/l, optionally about 20 g/l.
Clause C14. The calcined vehicular exhaust filter of any one of clauses C1 to C13, wherein the aerosol-deposited dry powder has a tapped density before loading of 1 to 3 g/cm³, optionally 1.5 to 2.5 g/cm³, optionally about 2 g/cm³.
Clause C15. The calcined vehicular exhaust filter of any one of clauses C1 to C14, having a filtration efficiency at 0.02 g/l soot loading of greater than 90%, preferably greater than 95%, preferably greater than 98%, preferably greater than 99%.
Clause C16. The calcined vehicular exhaust filter of any one of clauses C1 to C15, having a back pressure of 20-180 mbar at a flowrate of 600 m³/hr.
Clause C17. The calcined vehicular exhaust filter of any one of clauses C1 to C16, wherein the porous substrate comprises one or more washcoats.
Clause C18. The calcined vehicular exhaust filter of any one of clauses C1 to C17, wherein the calcined vehicular exhaust filter exhibits a substantially linear loading-back pressure response for soot loadings greater than 0.1 g/l, preferably for soot loadings greater than 0.05 g/l.
Clause C19. The calcined vehicular exhaust filter of any one of clauses C1 to C18, wherein the dry powder has a d50 (by volume) less than 10 microns, optionally less than 5 microns, optionally about 2 microns.
Clause C20. The calcined vehicular exhaust filter of any one of clauses C1 to C19 being a wall-flow filter.
Clause D1. An exhaust system comprising the calcined vehicular exhaust filter of any one of clauses C1 to C20.
Clause D2. A vehicle comprising the calcined vehicular exhaust filter of any one of clauses C1 to C20.

## Claims

1. A method for treating a filter for filtering particulate matter from exhaust gas, the method comprising the steps of:
a) containing a dry powder in a reservoir;
b) locating a filter in a filter holder, the filter comprising a porous substrate having an inlet face and an outlet face, the inlet face and the outlet face being separated by a porous structure;
c) establishing a primary gas flow through the porous structure of the filter by applying a pressure reduction to the outlet face of the filter;
d) transferring the dry powder from the reservoir to a spray device located upstream of the inlet face of the filter; and
e) spraying the dry powder, using the spray device, towards the inlet face of the filter such that the dry powder is entrained in the primary gas flow and passes through the inlet face of the filter to contact the porous structure;
wherein the dry powder comprises or consists of a metal compound for forming by thermal decomposition a metal oxide.

2. The method of claim 1, wherein the metal compound comprises or consists of a metal hydroxide, a metal phosphate, a metal carbonate, a metal sulphate, a metal perchlorate, a metal iodide, a metal oxalate, a metal acetate, a metal chlorate or a mixture thereof.

3. The method of claim 2, wherein the metal hydroxide is selected from the group consisting of magnesium hydroxide, calcium hydroxide, strontium hydroxide and barium hydroxide.

4. The method of claim 2 or claim 3, wherein the metal phosphate is selected from the group consisting of magnesium phosphate, calcium phosphate, strontium phosphate and barium phosphate; and/or the metal carbonate is selected from the group consisting of magnesium carbonate, calcium carbonate, strontium carbonate and barium carbonate.

5. The method of any preceding claim, wherein the dry powder additionally comprises a metal oxide or mixed metal oxide.

6. The method of any preceding claim, further comprising the step of:
f) calcining the filter after step e).

7. The method of any preceding claim, further comprising before step b) coating the filter with a washcoat, preferably a catalyst washcoat.

8. The method of any preceding claim, wherein the dry powder has a d50 (by volume) less than 10 microns, optionally less than 5 microns, optionally about 2 microns.

9. A filter obtainable by the method of any one of claims 1 to 14.

10. A calcined vehicular exhaust filter comprising a porous substrate having an inlet face and an outlet face, the porous substrate comprising inlet channels extending from the inlet face and outlet channels extending from the outlet face; the inlet channels and the outlet channels being separated by a plurality of filter walls having a porous structure;
the vehicular exhaust filter being loaded prior to calcination with an aerosol-deposited dry powder comprising or consisting of a metal compound for forming by thermal decomposition a metal oxide.

11. The calcined vehicular exhaust filter of claim 10, wherein the metal compound comprises or consists of a metal hydroxide, a metal phosphate, a metal carbonate, a metal sulphate, a metal perchlorate, a metal iodide, a metal oxalate, a metal acetate, a metal chlorate or a mixture thereof.

12. The calcined vehicular exhaust filter of claim 11, wherein the metal hydroxide is selected from the group consisting of magnesium hydroxide, calcium hydroxide, strontium hydroxide and barium hydroxide.

13. The calcined vehicular exhaust filter of claim 11 or claim 12, wherein the metal phosphate is selected from the group consisting of magnesium phosphate, calcium phosphate, strontium phosphate and barium phosphate; and/or the metal carbonate is selected from the group consisting of magnesium carbonate, calcium carbonate, strontium carbonate and barium carbonate.

14. The calcined vehicular exhaust filter of any one of claims 10 to 13, wherein the dry powder additionally comprises a metal oxide, optionally aluminium oxide.

15. The calcined vehicular exhaust filter of any one of claims 10 to 14, wherein a mass loading of the aerosol-deposited dry powder is 10 to 40 g/l, optionally 15 to 30 g/l, optionally about 20 g/l.
